# EUROPEAN PATENT SPECIFICATION

(11) **EP 1 188 106 B1**
(45) Date of publication and mention of the grant of the patent: **22.03.2006**
(21) Application number: 00930436.1
(22) Date of filing: 05.05.2000
(51) Int. Cl.: G06F 3/06

(54) **SYSTEMS AND METHODS FOR A DISK CONTROLLER MEMORY ARCHITECTURE**
ANORDNUNGEN UND VERFAHREN FÜR EINE PLATTENSTEUERUNGSPEICHER ARCHITEKTUR
SYSTEMES ET PROCEDES DESTINES A UNE ARCHITECTURE DE LA MEMOIRE D'UN CONTROLEUR DE DISQUE DUR

(30) Priority: 05.05.1999 US 132712 P; 12.04.2000 US 547567; 12.04.2000 US 548330
(43) Date of publication of application: 20.03.2002
(73) Proprietor: Qlogic Corporation, Aliso Viejo, CA 92656 (US)
(72) Inventor: DENNIN, William, W., Lake Forest, CA 92630 (US); WHITE, Theodore, C., Rancho Santa Magarita, CA 92688 (US)
(74) Representative: DeVile, Jonathan Mark
(86) International application number: PCT/US2000/012433
(87) International publication number: WO 2000/067107

(56) References cited:
- WO-A-98/14861
- US-A- 5 315 708
- US-A- 5 890 207

## Description

### Field of the Invention

The present invention relates generally to disk controllers and more particularly to disk controllers having a multiported memory architecture.

### Background of the Invention

Conventional computer systems typically include several functional units. These functional units may include a central processing unit (CPU), main memory, input/output devices, and magnetic disk drives. In conventional systems, the main memory is tightly coupled to the CPU via a system bus or a local memory bus. The main memory is used to provide the CPU quick access to data or program information that is stored in main memory at execution time. Typically, the main memory is composed of random access memory (RAM) circuits. A computer system including the combination of the CPU and the main memory is often referred to as a host system.

The main memory is typically smaller than the magnetic disk drive. The main memory is usually volatile, while the magnetic disk drive is non-volatile. Therefore, programming data information is often stored on the magnetic disk drive and is read into the main memory as needed. In contrast to the main memory, which is closely coupled to the CPU, the magnetic disk drive is usually more remotely coupled to the CPU. Because the magnetic disk drive is more remotely coupled to the CPU, access to the magnetic disk drive is typically slower and more complicated than access to the main memory. A disk controller typically couples the host system to the magnetic disk drive and handles the complex details of interfacing the magnetic disk drive to the host system. Communications between the host system and the disk controller is usually provided using one of a variety of standard 110 bus interfaces.

The magnetic hard disk drive assembly usually consists of one or more magnetic disks. Each disk typically has a number of concentric rings or tracks on which data is stored. The tracks themselves are further divided into sectors which are the smallest accessible data unit. A sector is accessed by positioning a magnetic head above the appropriate track. The first sector of a track is typically identified by an index pulse. The start of each other track sector is identified with a sector pulse. The drive waits until the desired sector rotates beneath the head and then proceeds to read or write the data. The date is accessed serially, one bit at a time. Usually, each disk in the disk drive has its own read/write head.

The disk drive is connected to the disk controller. The disk controller performs numerous functions, such as, for example, converting digital data to analog head signals, converting analog head signals to digital data, disk formatting, error checking, logical-to-physical address mapping, and data buffering. For example, the disk drive typically formats the data from the drive. The data from the drive is serially arranged and the disk controller converts the serial data into a parallel arrangement.

The data buffering function is used in transferring data between the host and the mass storage memory. Data buffering is needed because the speed at which the disk drive can supply or accept data from the host is different then the speed at which the host can correspondingly read or supply the data. Therefore, the disk controller conventionally contains a buffer memory that temporarily stores data being read or written to the hard drive to synchronize the data with the speed of the I/O bus to which it is connected. Thus, the buffer decouples the rate at which data is exchanged between the drive and host and the rate at which data is written and read from the drive. The buffering function is particularly necessary because each sector is read or written as a whole.

In addition to providing access to both the I/O bus and the disk drive, the buffer memory often is accessed by a local processor on the disk controller. Thus, the disk controller buffer memory may be accessed by many functional portions of the disk controller and by the host. In conventional systems, the competition for access to the buffer memory is often a bottleneck which greatly restricts the data transfer rates between the buffer memory and the functional units, as well as to the disk drive and the host.

Another performance bottleneck found in conventional disk controllers is the local processor. The local processor typically manages an UO bus interface circuit, the buffer memory, the disk formatter, as well as management of the disk controller as a whole. Furthermore, conventional systems require the local processor to manage data transfers through the buffer memory at a low level. Typical general-purpose processors are inadequate to handle such application specific functions in an efficient manner.

In addition, conventional disk controllers do not fully utilize their processors. For example, if, while transferring data from the disk to the I/O bus using one or more the disk controller processors, the transfer outpaces the disk's ability to supply data, the processors are wastefully paused until the disk catches up.

WO9814861 describes a method for operating multiple contexts within a target device involving storing each command within its own context within the target device controller (e.g. an embedded controller in an SCSI disc drive), to retain all unique parameters required for the processing of each command. The use of multiple contexts allows processing of multiple commands within target device to better utilise bandwidth of host channel, and reduce latency in servicing queued commands on initiator services.

### Summary of the Invention

Various respective aspects and features of the invention are set out in the claims. Embodiments of the present invention generally relate to efficient and flexible methods and systems of buffering and accessing data being written to or read from mass storage devices.

In one embodiment, a disk controller includes a data buffer used to buffer data transferred between a mass storage device and an I/O bus. In another embodiment, the data buffer includes a multi-port memory. The multi-port memory is coupled to a plurality of channels, such as, by way of example, a disk channel and an 1/0 channel, as well as one or more processors.

In one embodiment, the multi-port memory may be used as both a random access memory and a first-in-first-out (FIFO) memory. Thus, when used as a first-in-first out memory, the multi-port memory may be used to buffer data between the disk channel and 1/0 channel. The multi-port memory may be used for context switching, wherein register data from one or more processors is swapped in or out of the memory. The efficient register swapping provided by one embodiment of the present invention advantageously allows the processor to quickly switch between tasks. This is very useful if a first task is in a wait state, because rather than wasting processor time pausing white waiting for the wait state to end, the processor can quickly switch to another task, and then, after the wait state has ended for the first task, switch back to the first task.

In addition, in one embodiment, the random access feature allows selected data stored in the multi-port memory to be swiftly retrieved. For example, if the memory is used to store a Fibre Channel frame and associated CRC data, the CRC data can be immediately retrieved without having to read out the entire frame.

In one embodiment, the multi-port memory is a OMA (direct memory access) memory. In an exemplary embodiment, the multi-port memory's ports include a random access port, a FIFO access port, a register access port, and/or a buffer controller DMA port. The random access port is connected to a microprocessor interface bus which in turn is connected to one or more processors, such as a microprocessor and a microcontroller, as well as the FIFO access port. The register access port is may also be connected to one or processors, such as a microcontroller. The buffer controller DMA port is connected to a CRC (cyclic redundancy code) checker and to a buffer memory.

In one embodiment, the multi-port memory contains 64 bytes and can hold an entire Fibre Channel protocol command. Furthermore, a state machine associated with the mufti-port memory can perform several commands. In another embodiment, one or more of the commands are configured to efficiently manage I/O packets or frames. In yet another embodiment, the state machine commands include one or more of the following: a fetch current FCP (Fibre Channel Protocol) command, an update current FCP pointer command, a load FIFO command, an unload FIFO command, a load FIFO with CRC, an unload FIFO with CRC, a write to buffer memory command, and a read from buffer memory command in one embodiment, a command is provided that causes the transfer of an entire Fibre Channel command into the FIFO without further intervention from the microprocessor or the microcontroller. One embodiment provides direct frame access to Fibre Channel frames. In another embodiment, the commands may be halted and/or paused.

### Brief Description of the Drawings

Figure 1 is an illustration of one environment using one embodiment of the present invention;
Figure 2 is an illustration of the ports of one embodiment of a buffer controller;
Figure 3 is a more detailed illustration of the buffer controller of Figure 2;
Figure 4 illustrates one embodiment of a memory unit;
Figures 5A-D illustrate one embodiment of a state machine used with the buffer controller;
Figure 6 is an illustration of one embodiment of data translation;
Figure 7 is an illustration of a Fibre Channel control block;
Figure 8 is an illustration of a first exemplary data transfer;
Figure 9 is an illustration of a second exemplary data transfer;
Figure 10 is an illustration of a third exemplary data transfer;
Figure 11 is an illustration of a fourth exemplary data transfer;
Figure 12 is an illustration of a fifth exemplary data transfer;
Figure 13 is an illustration of a sixth exemplary data transfer,
Figure 14 is an illustration of a seventh exemplary data transfer; and
Figure 15 is an illustration of an eighth exemplary data transfer.

### Detailed Description of a Preferred Embodiment

The present invention is generally related to efficient and flexible methods and system for buffering data being written to or read from a mass storage device.

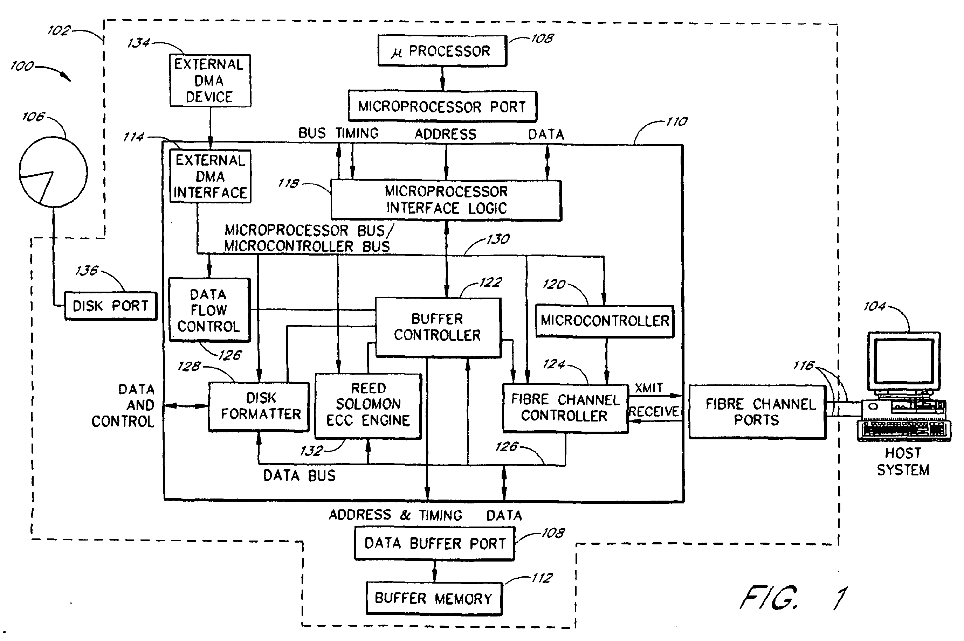

As illustrated in Figure 1, in one embodiment of an electronic system 100, a disk controller 102 is used to interface a host system 104 to a mass storage device 106, such as a magnetic disk drive or an optical disk drive, via a disk port 136. The illustrated disk controller 102 includes a microprocessor 108, an embedded controller 110, buffer memory 112, and an external DMA (direct memory access) device 114. The disk controller is coupled to the host system 104 via an 110 bus 116, such as a Fibre Channel bus having dual loops. The embedded controller 110 includes a microprocessor interface 118 which is coupled to the microprocessor 108. A microprocessor bus 130 couples the microprocessor interface logic 118 to the external DMA interface 134, a microcontroller 120, a buffer controller 122, and a Fibre Channel interface 124 located within the embedded controller 110. The external DMA interface 134 in turn is coupled to the external DMA device 134 and to the buffer controller 122. The buffer controller 122 is also coupled to the buffer memory 112 and to the Fibre Channel interface 124. The Fibre Channel interface 124 is coupled to Fibre Channel loops 116 via Fibre Channel transmit and receive circuitry within the interface 124. The Fibre Channel loops 116 are also connected to one or more hosts 104. The Fibre Channel interface 124 can be used to communicate both Fibre Channel protocol and SCSI protocol.

A data flow controller 126 is coupled to the external DMA interface 134, the buffer controller 122, and the Fibre Channel interface 124. An ECC engine module 132 is connected to the disk formatter 128, the buffer controller 122, and the Fibre Channel interface 124, via the data bus 126.

The Fibre Channel interface 124 implements the Fibre Channel protocol. In one embodiment, the Fibre Channel interface 124 implements the FC-AL (Fibre Channel Arbitrated Loop) protocol including the FC-1 and FC-2 layers of the Fibre Channel signaling interface. The Fibre Channel interface 124 includes an encoder and decoder and a frame buffer for clock skew management and a Fibre Channel protocol handier machine. The Fibre Channel interface 124 validates and routes data trains received from the Fibre Channel loops to appropriate areas in the frame buffer. The transmit path of the Fibre Channel interface 122 transmits frames from the frame buffer to the Fibre Channel. The Fibre Channel interface automatically handles frame delimiters and frame control.

In one embodiment, the disk formatter 128 provides an interface to the disk 106. The disk formatter 128 receives control information and parameters from the local processor 108. The disk formatter 108 then carries out the requested action. The microprocessor may also handle other tasks, such as signal processing for servo control of the disk head, and SCSI protocol management, which may be used to communicate data over the Fibre Channel. The microcontroller 120 may be used to perform other tasks, including low level tasks such as Fibre Channel transfer management tasks, thereby offloading the processor 108. Thus, in one embodiment, the controller workload is advantageously divided among multiple processors, allowing for more efficient task execution.

In one embodiment, the microcontroller 120 is an 8 bit machine which can support either 8 bit or 16 bit DMA transfers. In addition, the microcontroller 120 has registers and an internal ALU, iricluding an accumulator used for mathematical operations.

In one embodiment, the buffer controller 122 is a multiple channel DMA controller integrated with a synchronous DRAM (SDRAM) controller. In another embodiment, the buffer controller 122 supports buffer sizes of up to four megabytes. However, in still another embodiment, sizes greater or less than four megabytes are supported as well. The buffer controller 122 provides for high-speed buffer memory 112 initialization and verification and reduces power upon initialization. The buffer controller 122 also provides controls to the buffer memory 112, which, in one embodiment, is implemented using synchronous DRAM (SDRAM). However, other memory architectures, such as asynchronous RAM or static RAM, can be used as well.

Buffer management is provided by a four-channel, high speed, bursting OMA controller. The buffer controller 122 provides an interface between a variety of modules and interfaces, including, by way of example, the buffer or holding memory 112, the disk channel, an ECC channel, the Fibre Channel, the microprocessor 108 and the microcontroller 120. The buffer controller 122 regulates and buffers data movement into and out of the SDRAM buffer memory 112. Each OMA channel supports DMA bursting of multiple blocks of data, allowing high bandwidth transfers. Each DMA channel has associated control, configuration, and buffer memory address registers. In one embodiment, the buffer memory 112 is shared by other units which are provided with access-turns or access tenures. Within the tenure, a given data source bursts data until the transfer is complete or an assigned tenure time has expired. However, many of the OMA channels are connected to modules running on a different clock or at a different speed than that of the buffer controller 122. Hence, as discussed below, a memory unit configurable as a FIFO (first-in-tirst-out) memory is used to synchronize and buffer channel data.

The buffer controller 122 also provides microprocessor address decoding, priority arbitration for the buffer resource, block CRC (BCRC) checking, and automatic DRAM refresh control. In one embodiment, a CRC calculator/checker includes an accumulator with feedback.

The data flow controller 126 reduces data transfer time by, in one embodiment, automatically monitoring and controlling the flow of data between the disk 106 and the Fibre Channel ports. Automatic control of data flow between these channels reduces the number of interrupts that occur in a typical disk-to-Fibre Channel data transfer. In addition, the data flow controller 126 automatically helps prevent buffer overflow and underflow conditions while temporarily suspending or pausing the disk formatter or the Fibre Channel DMA channel before the buffer becomes full or empty.

Exemplary data flow operations between the host 104 and the disk 106 will now be described. A typical write operation proceeds as follows. The host 104 sends a write command over the Fibre Channel bus 116 to the disk controller 102. The command passes through the Fibre Channel interface 124 and is then loaded via the bus controller 124 into the buffer memory 112. The host path to the disk controller is termed Channel 1. Once the write command is written into the buffer memory 112, the microprocessor 108 reads the command out of the buffer memory 112 and appropriately sets up the disk controller registers in preparation for the commanded write operation. The disk controller registers include registers associated with the buffer controller 122, the disk formatter 128, and the data flow controller 126. Once the setup is complete, the microprocessor 108 notifies the host 104 that the disk controller 102 is ready to receive the write data. The host 104 then initiates a OMA (direct memory access) transfer into the buffer memory 112. During the buffer load operation, the CH1 module 310 continuously calculates a CRC based upon the write data. The calculated CRC is stored in the buffer memory 112 with the associated write data. The data flow controller 126 monitors when a given number of sectors are stored in the buffer memory 112 and initiates the transfer from the buffer memory 112 through the buffer controller 122 to the disk formatter 128 and from there, the disk formatter 128 writes the data to the disk 106 via the write channel. As the data is read out of the buffer memory 112 and written to the disk 106, an associated ECC code is calculated and appended to the end of the sector data. When the write operation is completed, the microprocessor 108 generates an interrupt which is transmitted over the Fibre Channel interface to the host 104, thereby informing the host 104 that the write operation is complete.

A read operation is performed in a similar fashion as the write operation, but in reverse. The host 104 sends a read command to the disk controller 102 which in turn stores the read command into the buffer memory 112. The microprocessor 108 then reads the command out of the buffer memory 112 and appropriately initializes the various functional block of the disk controller 102 to perform the read. The data is read from the disk 106 and passes through the disk formatter 128 to the buffer controller 122, and from the buffer controller 122 to the buffer memory 112. Both the data and the associated CRC are stored together in the buffer memory 112. The ECC module 132 monitors the data transfer and calculates the ECC code throughout this data storing operation. Upon completion of the ECC calculation, the ECC module 132 determines which errors occurred in the read data and appropriately corrects those errors in the buffer memory 112. The CH1 module 310 reads data from buffer memory 112, then checks the CRC of the resulting stored sector from the buffer memory 112 and ensures that there are no errors. Once it is determined that there are no errors remaining in the data, the data is transferred from the buffer memory 112 through the buffer controller 122 and out to the host bus. The CRC code is stripped off during this process so that only data is sent to the host 104.

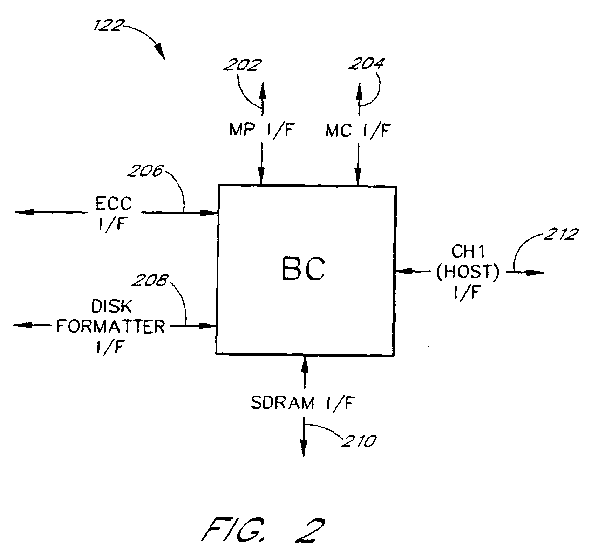

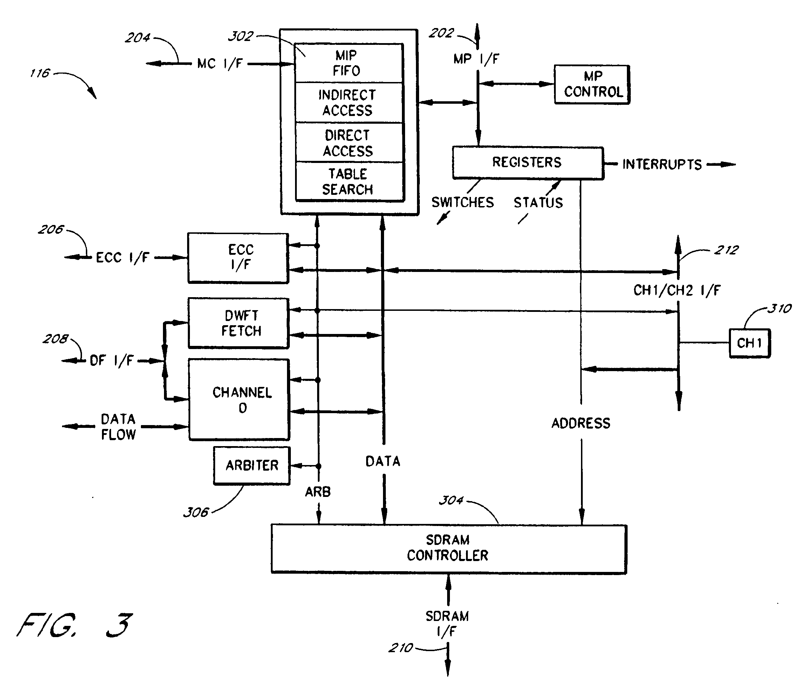

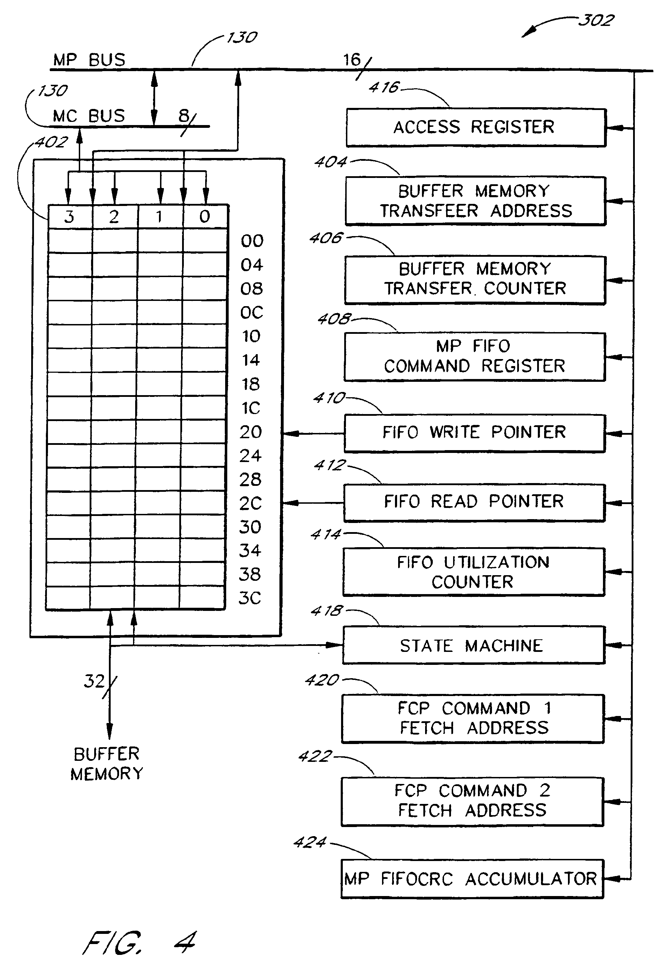

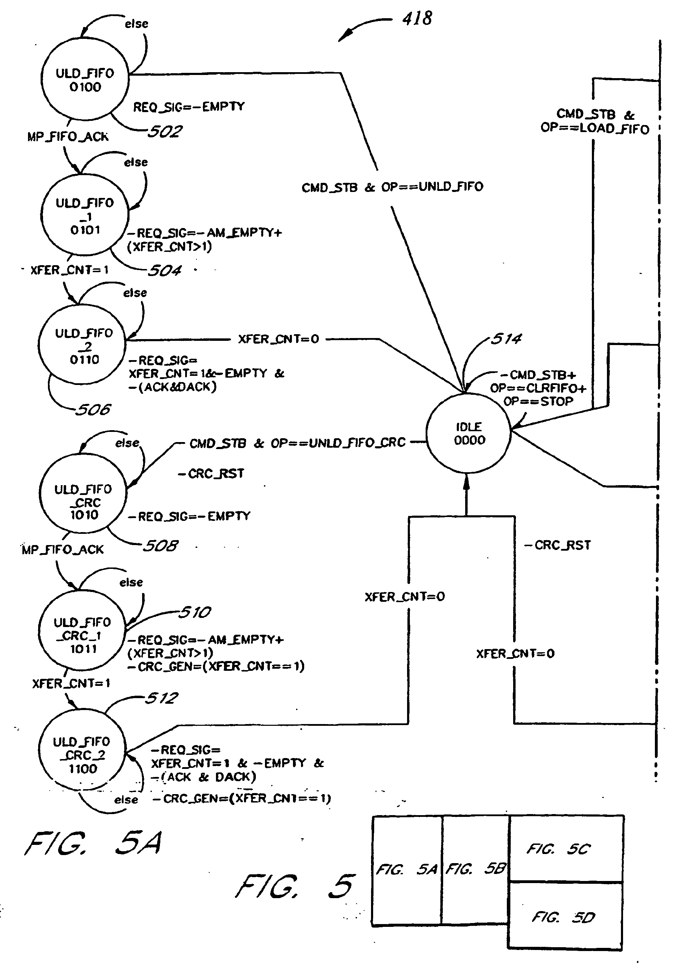

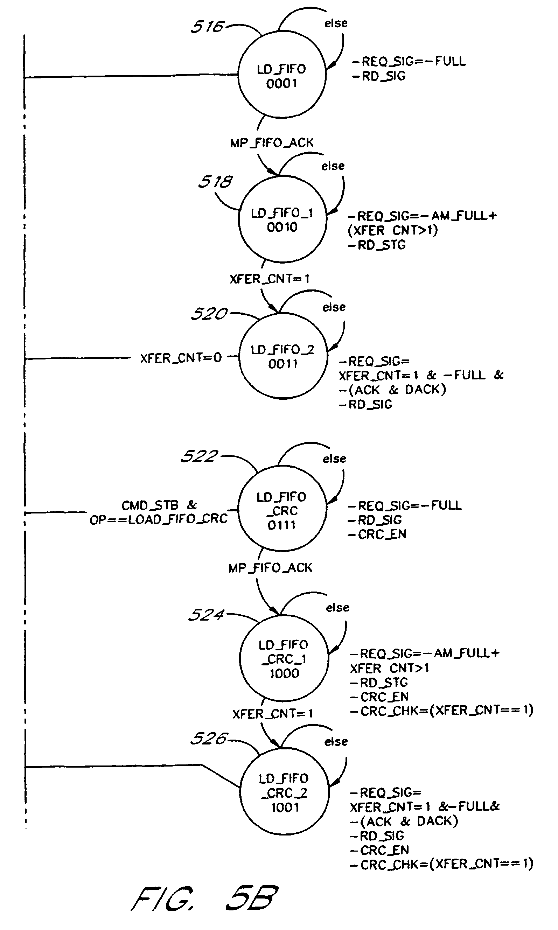

Figure 2 illustrates one embodiment of the interfaces to the buffer controller. The buffer controller is coupled to a microprocessor interface 202, a microcontroller interface 204, an ECC interface 206, a disk formatter interface 208, a host interface 212, and an SDRAM buffer memory interface 210. The buffer controller utilizes corresponding FIFOs to buffer the data transferred between the various interfaces.

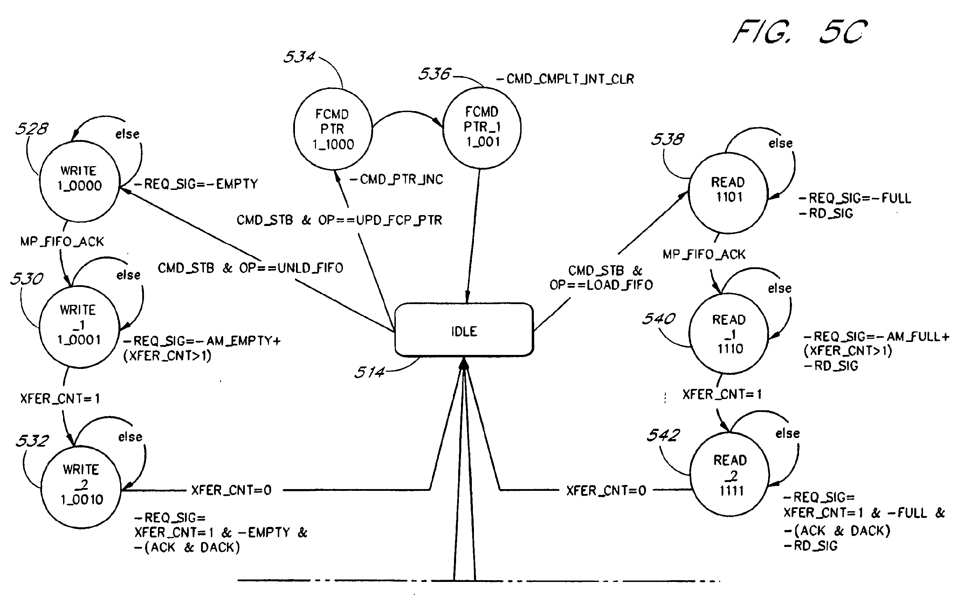

Figure 3 is a more detailed illustration of one embodiment of the buffer controller 122. The buffer controller 122 includes a memory unit 302 configurable as a FIFO with four ports. For example, the MP FIFO 302 may have a random or direct access interface, a FIFO or indirect access interface, a register access interface, and a buffer controller DMA interface. The FIFO 302 may be accessed by many clients and other devices, and thus acts as a switching station, allowing data to be temporarily stored while being routed from one place to another. In the illustrated embodiment, the DMA interface is used to provide access to the buffer memory 112. The register access interface, wherein all or part of the FIFO is locally addressable as an internal register file by the microcontroller 120, provides one of several access paths to the microcontroller 120. The indirect access interface, wherein all or part of the FIFO is addressable using FIFO pointers, provides still another access path. The direct access interface, wherein all or part of the FIFO is addressable as random access memory, and is memory mapped, provides still another access path.

In one embodiment, all or a portion of the FIFO 302 is within address space of one or more processors, such as the microprocessor 108 and/or the microcontroller 120. In another embodiment, the FIFO 302 may have more or fewer ports. By providing multiple types of FIFO access ports, the flexibility, efficiency, and throughput of data transfers through the FIFO 302 is greatly enhanced. The FIFO 302 further provides the microprocessor 108 with access to disk format tables, data, program code, and Fibre Channel command blocks, stored in the FIFO 302 or in the buffer memory 112. For example, the FIFO 302 may be used to overlay programs stored in the buffer memory 112. Hence, the FIFO 302 may also be termed an MP (microprocessor) FIFO or MP OMA FIFO.

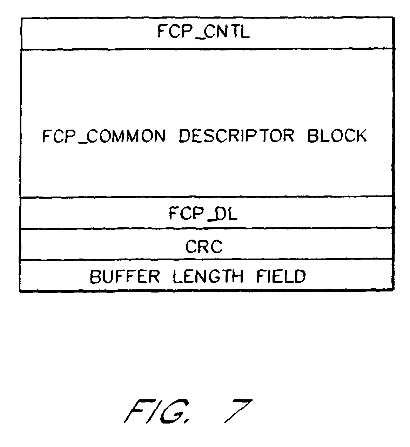

In one embodiment, the MP FIFO 302 includes 64 bytes of storage. As discussed below, this advantageously provides enough storage memory to hold a complete Fibre Channel command, in addition to an associated CRC and buffer length field. The format of the Fibre Channel command is illustrated in Figure 7. The FIFO 302 can be used to burst data to and from the buffer memory 112. Thus, data transfer latencies may be greatly reduced. The random access port may be accessed via the microprocessor bus and microcontroller bus 130, which respectively connect to the microprocessor 108 and the microcontroller 120. In addition, the microcontroller 120 can access the MP FIFO 302 via the register access port. The buffer controller DMA port provides an interface to the SDRAM buffer memory 112 as well as to the CRC checker and generator. Various buffer controller functional blocks or modules are interconnected by an internal buffer controller data bus. Thus, in one embodiment, the FIFO 302 can be accessed by direct addressing as a random access memory. In addition, the MP FIFO 302 can be accessed as a first-in-first out memory, with data loaded and unloaded to and from the FIFO 302 via a FIFO access register or port.

Figure 4 illustrates in greater detail one embodiment of the MP FIFO 302 with multiple access channels. In one embodiment, the MP FIFO 302 stores up to 64 bytes organized in a 16 x 32 array 402. Thus, the FIFO array 402 can hold sixteen 32 bit words. In one embodiment, the FIFO array 402 is implemented using dual port asynchronous static RAM elements. One of the two RAM ports is a read port and the other RAM port is a write port. Each of the read and write ports may be separately and independently controlled. The read and write ports may be accessed via one or more interfaces or access ports. In one embodiment the FIFO array 402 is accessible as an internal register file to one or more processors, such as the microcontroller 120. Thus, the FIFO array 402 can be quickly accessed by the microcontroller 120 with little time or management overhead. This contrasts with conventional disk controllers, which access data more slowly from external memory.

As illustrated in Figure 4, in one embodiment, the MP FIFO 302 includes a buffer memory transfer address register 404, a buffer memory transfer counter 406, a MP FIFO command register 408, a FIFO write pointer 410, a FIFO read pointer 412, a FIFO utilization counter 414, the FIFO access register 416, FCP command fetch address registers 420, 422, and a state machine 418. The aforementioned registers and counters are used to control data transfers to and from the MP FIFO 302. The FIFO array 402 may be memory mapped directly into an internal microcontroller register file. In one embodiment, the registers, counters, and FIFO array 402 are accessible as random access memory by the microprocessor 108 and/or the microcontroller 120. As discussed below, great flexibility in accessing Fibre frames and in locating associated CRC data located at a random FIFO location is thus provided.

In one embodiment, a semaphore is used to avoid conflict between multiple devices, such as the microprocessor 108 and the microcontroller 120, trying to access the FIFO resources. Thus, in one embodiment a register is used to store a semaphore grant bit. Before attempting to use the FIFO 302, or to modify FIFO information, such at the pointers, counters, access register, and the like, a requesting device first attempts to acquire the semaphore.

The MP FIFO command register 408 is used to initiate transfers to or from the buffer memory 112 from or to the MP FIFO 302. A variety of FIFO commands are used to control data transfers between the FIFO 302 and the buffer memory 112. The transfer commands can generally be categorized in four groups. These command groups include load and unload commands, read and write commands, control commands, and automate commands. Some of the commands enable direct frame access to Fibre Channel frames. The load and unload data transfer commands treat the FIFO 302 as a first-in-first-out memory. The load and unload data transfer commands cause the loading and/or unloading of the FIFO 302 using the MP FIFO write pointer 410, the MP FIFO read pointer 412, and the MP FIFO utilization counter 414. In one embodiment, one or more transfer commands are configured to handle transfers greater than the FIFO size.

The read and write data transfer commands treat the FIFO as a random access memory. In one embodiment, the read and write commands read and write data starting at a location zero in the FIFO 302. In another embodiment, the data transfers may begin at other FIFO memory addresses.

The control commands, such as the Clear FIFO command, may be used to clear the FIFO by clearing the associated counters and registers. In addition one or more of the control commands may be used to pause or stop any command currently in progress. The automate commands, such as the Fetch FCP command and the Update Current FCP Command Pointer command, efficiently automate the fetching or transfer of commands, such as Fibre Channel command frames, from the buffer memory 112 or the like, to the FIFO 302. As previously discussed, in one embodiment, the FIFO commands are executed by a state machine.

The FIFO read and write pointers 412, 410 are respectively are used to keep track of the current read and write locations when the FIFO 302 is being accessed in a first-in-first-out manner. The write pointer 410 controls the location or address of a current FIFO write operation. The write pointer 410 contains a byte offset relative to the starting address of the FIFO array 402. In one embodiment, the write pointer 410 is initialized to zero upon a power on reset or upon receipt of a MP DMA FIFO Reset command. Similarly, the read pointer 412 controls the location or address of a current FIFO read operation. The read pointer 412 contains a byte offset relative to the starting address of the FIFO array 402. In one embodiment, the read pointer 412 is initialized to zero upon a power-on reset or upon receipt of a MP OMA FIFO Reset command.

The FIFO utilization counter 414 is used to keep track of the FIFO utilization count. For example, the FIFO utilization counter 414 may track the amount of FIFO memory locations utilized, and hence, the number of FIFO locations which are not being utilized. In one embodiment, the utilization counter 414 may be read or written to as register by the local microprocessor 108 and/or microcontroller 120. The readable count provides the number of bytes stored in the FIFO array 402. In one embodiment, the number of bytes is rounded down to the nearest word boundary. The FIFO count is decremented as data is read from the FIFO array 402. Thus, in one embodiment, a 4 byte read operation via the access register 416 decrements the count by four when the last of 4 byte is read. Similarly, reading two 16 bit halfwords from the FIFO array 402 decrements the FIFO count by four when the last 16 bit halfword is read. In addition, the FIFO count is decremented by four upon reading a 32 bit word from the FIFO array 402. The data read from the array 402 may be stored in another memory, such as the buffer memory 112.

The MP FIFO access register 416 is used by the microprocessor 108 to read and write data to the FIFO array 402. Thus, data written to the access register 416 is in turn written to the FIFO location indicated by the write pointer 410. The write pointer 410 is typically incremented following such a write access. Similarly, when data is read via the access register 416, the FIFO read counter is incremented. In one embodiment, a varying number of bytes may be read or written via the access register 416. Thus, by example, either one byte or two bytes may be read or written in one operation using the access register 416. SDRAM access to the FIFO array 402 is provided the state machine 418, as discussed below.

The MP FIFO buffer memory transfer address register 404 is used when transferring data to or from the buffer memory 112. The buffer memory transfer address register 404 is loaded with the appropriate buffer memory address before a transfer takes place. The buffer memory transfer counter 406 is used to keep track of the number of bytes transferred to the buffer memory 112. The transfer counter 406 is set to a number corresponding to the amount of data, such as the number of bytes, to be transferred. In one embodiment, the byte count is a multiple of four. Advantageously, the byte count can exceed the size of the FIFO array 402. In one embodiment, the transfer counter may be set to transfer up to 64K bytes. In another embodiment, the transfer counter 406 can be set to a count greater than 64K. Thus, in one embodiment of the present invention, block transfers are not limited to the FIFO size. If the FIFO array 402 becomes full during a transfer of data to the FIFO 302, the transfer is then suspended until data is read out of the FIFO array 402. Similarly, if the FIFO array 402 becomes full during a transfer, the transfer is then suspended until data is loaded in the FIFO array 402.

In one embodiment, a device, such as the microprocessor 108 or the microcontroller 120, can access the FIFO 302 through the MP FIFO access register 416 while the FIFO commands are executing. Thus, for example, the microprocessor or microcontroller can read from the FIFO 302 as the FIFO 302 is being filled. Similarly, the microprocessor 108 or the microcontroller 120 can write to the FIFO 302 as the FIFO is being read or emptied.

The operation of the MP FIFO 302 as a first-in-first-out memory will now be discussed. In one embodiment, writing to the FIFO access register 416 causes the data to be stored at the offset loaded into the write pointer. The write pointer is incremented in a circular fashion each time data is written to the FIFO access register 416. A pause signal is generated when a write operation to the access register 416 is attempted when the utilization counter count equals the FIFO size. This ensures that FIFO data is not overwritten. The pause signal causes the device writing to the FIFO 302, such as the microprocessor 108 or the microcontroller 120, to stall until memory locations are made available. The memory locations may be made available by the performance of a read operation from the access register, which would thereby decrement the utilization count. The pause function permits data transfers to and through the FIFO 302 to be greater than the FIFO size. If the FIFO 302 fills or empties during a write or read process, the process is simply paused, rather than terminated. Thus, the pause function ensures overflow conditions do not occur during data transfers.

In addition, the FIFO memory locations may be made available upon the execution of a FIFO Clear command, which would clear or zero the utilization counter.

Reading the FIFO access register 416 causes the data located at the read pointer offset to be read and increments the read pointer in a circular fashion. The utilization word count is decremented each time a read operation is performed. The pause signal is generated if a read operation from the FIFO access register is attempted when the FIFO utilization count is zero. The pause signal causes the device reading the FIFO 302, such as the microprocessor 108, the microcontroller 120, or the DMA channel, to stall until one or more FIFO memory locations are filled or loaded. The memory locations may loaded by the performance of a write operation from the access register, which would thereby increment the utilization count. Thus, the pause function ensures underflow conditions do not occur during data transfers.

As previously discussed, in one embodiment the MP FIFO array 402 may also be directly and randomly accessed by the microprocessor 108 or microcontroller 120. The static RAM elements used to form the MP FIFO array 402 enable the MP FIFO 302 to be read as a 64 byte random access memory. The array 402 may be mapped into both the microprocessor address space and the microcontroller address space. In one embodiment, reading or writing the MP FIFO. 302 as a directly addressable random access array does not affect the MP FIFO registers or counters associated with the first-in-first-out type of operation.

The MP FIFO 302 may also be used for storing microprocessor or microcontroller internal register information during context switching operations. Thus, the microprocessor 108 or microcontroller 120 can quickly swap register file data in and out of the FIFO array 402. The efficient register swapping provided by one embodiment of the present invention advantageously allows the processor to quickly switch tasks.

Context switching allows for disk controller tasks to be performed in a more efficient manner. For example, if, while transferring data from the disk 106 to the Fibre Channel interface 124 using one or more the disk controller processors, such as the microcontroller 120, the transfer outpaces the disk's ability to supply data, it would be more efficient for the microcontroller to perform some other task during this period, rather than wastefully pausing until the disk 106 catches up. By way of example, it would be advantageous to send cache data to a different host, while waiting for additional disk data to accrue. Thus, one embodiment of the present invention allows the context of one operation to be saved in the FIFO 302 while another task is performed. Context switching can be performed especially quickly with one embodiment of the present invention, as the FIFO array 402 is accessible as an internal register file of the microcontroller 120. The microcontroller 120 can therefore quickly swap context information into and out of the FIFO array 402. Thus, the context does not have to be stored in slower secondary memory, such as the buffer memory 112. Depending on the size of the FIFO array 402 and the amount of context data, the FIFO array 402 may be used to store multiple contexts at the same time.

The context information may include relevant information used to keep track of a task, such as frame counts, sequence counts, transfer counts, and the like. Thus, in one embodiment, if a transfer runs out of available data, the transfer operation may be suspended, and the context of the operation may be stored in the FIFO 402. Depending on the size of the cache data, the context may be changed several times.

The stored context may be restored using a variety of techniques. For example, the stored context may be restored once additional data is available for the suspended transfer. The restored context can overwrite an existing context, if no longer needed. Using another technique, a context can be swapped back into FIFO 402, and the replaced context can be swapped out of the FIFO 402 at the same time.

Referring to Figure 3, an SORAM controller 304 and an arbiter module 306 are used in accessing the buffer memory 112. The arbiter 306 selects a requester when multiple requests are active, and establishes an access tenure. The arbiter 306 then grants the requester an access turn. The SORAM controller 304 then proceeds to move data between the buffer memory 112 and the buffer controller data bus.

As previously discussed, special commands are provided to facilitate access to the data stored in the MP FIFO 302 In one embodiment, the FIFO state machine 418 accepts and performs the commands, listed in Table 2 below.

In one embodiment, a transfer is initiated upon writing a command to the command register 408. A MP DMA FIFO Command Active bit is set in a status register to indicate that a FIFO command is in the process of being executed. Table 1 below illustrates one embodiment of the bit assignment for the command register 408.

**Table 1**

| **Bit Position** | **Name** |
|---|---|
| 15-8 | Reserved |
| 7 | Imerrupt When Complete |
| 6 | Select FCP CMD 2 |
| 5 | Swap Halfword In Words |
| 4 | Swap Bytes in Halfwords |
| 3.0 | Command |

Referring to Table 1, bits 15-8 of the command register 408 are reserved. When the LBA (logical block address) format bit (8) is set, a CRC hardware accumulator is initialized with the inverted LBA as the seed. Otherwise the CRC accumulator will just use the seed, which, in one embodiment, is all ones. In one embodiment, the use of a dedicated, hardware CRC accumulator permits the CRC to be quickly calculated without loading down the processors with this task.

Commands loaded into the command register 408 may cause an interrupt signal to be generated. In one embodiment, an interrupt is generated when a command is completed and the Interrupt When Complete bit (7) is set in the command register 408. A Command Active bit is set in the status register while a command is still active. In addition, a Command Compfete bit may be set in the status register upon completion of a command. In one embodiment, the interrupt may go to a processor, such as the microcontroller 120 or microprocessor 108. The receiving processor may mask the interrupt, or pass the interrupt on to another processor or to the host 104.

A description of bits 6-4 will be later described. Table 2, below, illustrates the operations defined by bits 3-0 of the command register 408.

**Table 2**

| **Operation** |
|---|
| Clear FIFO |
| Stop FIFO |
| load FIFO |
| Unload FIFO |
| Load FIFO with BCRC check |
| Unload FIFO with BCRC Generation |
| Read from Buffer Memory |
| Write to Buffer Memory |
| Fetch FCP Command |
| Update Current FCP Command pointer |

The Clear FIFO command sets or dears the FIFO read and write pointers 412, 410 to zero. In one embodiment, the contents of the FIFO array 402 are unaltered by the Clear FIFO command. In one embodiment, the Clear FIFO command may be issued while other commands are active.

The Stop FIFO command stops any active FlFO command and resets the FIFO state machine 418. In one embodiment, the Stop FIFO command may be issued while other commands are active. In one embodiment, the contents of the pointers 410, 412 and the FIFO array 402 are unaltered by the Stop FIFO command.

The Load FIFO command transfers data from the buffer memory 112 to the MP FIFO 302. The data is loaded into the FIFO array 402 starting at the location defined by the MP FIFO write pointer 410. The number of bytes to be transferred is set in the Buffer Memory transfer counter 406. The buffer memory start address for the transfer is set in the buffer transfer address register 404. Advantageously, the number of bytes to be transferred is allowed to exceed the size of the FIFO array 402. Thus, transfers can be of any desired size. In one embodiment, the transfer counter is sized to manage transfers up to 4 Kbytes in size, as compared to the 64 byte FIFO array size. However, the transfer counter can be sized to handle larger or smaller transfers, as desired.

In one embodiment, 4 Kbytes may be transferred as a result of one Load command. The Load FIFO operation will be suspended if the FIFO 302 is full and the transfer is incomplete. An MP DMA FIFO Full bit is set in the status register is set to indicate the FIFO array 402 is full. The transfer may resume automatically when the FIFO 302 begins to empty and the MP DMA FIFO Full bit is cleared.

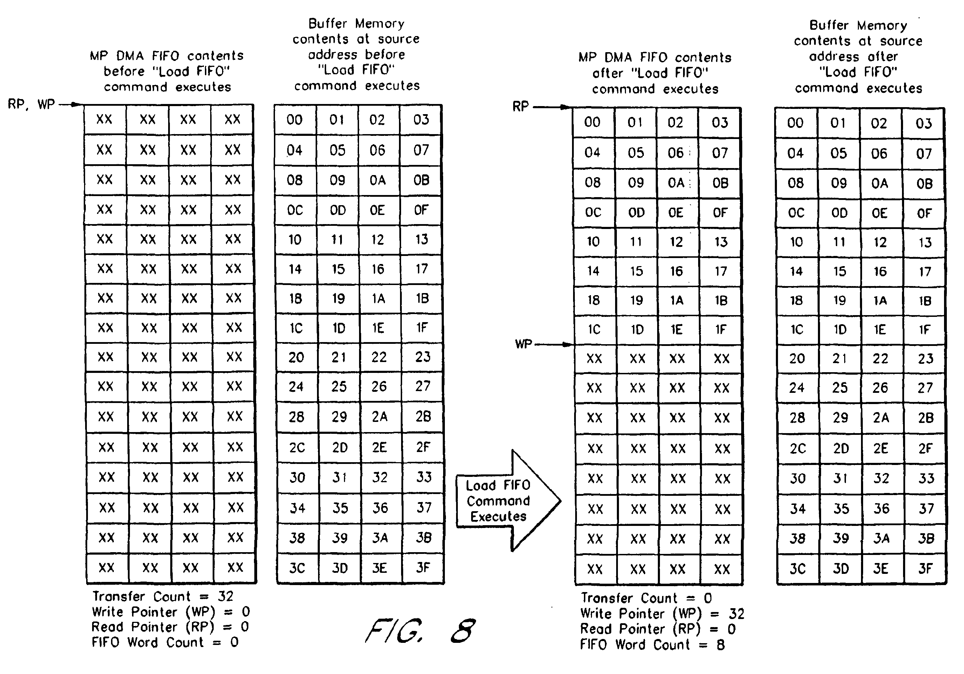

Figure 8 illustrates one example of a Load F1F0 command operation. The FIFO array 402 is assumed to contain "don't care" information, designated by "xx". The write pointer (WP) 410 and read pointer (RP) 412 are set to "0," thereby pointing to the physical beginning address of the FIFO array 402. When the read pointer 412 points to the same address as the write pointer 410, the FIFO 402 is either empty or full, depending on the utilization count. The FIFO word count, indicating how many FIFO word locations have been used, is at "0," indicating the FIFO 402 is empty. The Buffer Memory transfer counter 406 is loaded with "32", indicating 32 bytes are to be transferred from the buffer memory 112 to the FIFO array 402. For clarity, in the present example, the buffer memory 112 is loaded with sequential numbers, though, in one embodiment, the actual buffer memory contents does not affect the operation of the Load FIFO command.

Once the Load FIFO command is received by the command register 408, the transfer of 32 bytes from the buffer memory 112 to the FIFO array 402 takes place. The buffer memory data is written to the FIFO 302 beginning at the location indicated by the write pointer 410, in this example "0". The write pointer 410 is incremented as each byte is transferred and loaded into the FIFO array 402. This process repeats until the number of bytes specified by the transfer count, in this example 32, is transferred. As illustrated in Figure 8, once the Load FIFO command is complete, the FIFO array 402 contains the transferred data, the write pointer 410 has been incremented to 32, the read pointer 412 remains at 0, and the FIFO word count is at 8. In one embodiment, the transferred data also remains in the buffer memory 112.

The Unload FIFO command transfers data from the MP FIFO 302 to the buffer memory 112. The data is unloaded from the FIFO array 402 starting at the location defined by the MP FIFO read pointer 412. The number of bytes to be transferred is set in the Buffer Memory transfer counter 406. The buffer memory start destination address for the transfer is set in the buffer transfer address register 404. As with the Load command, the number of bytes to be transferred is allowed to exceed the size of the FIFO array 402. The Unload FIFO operation will be suspended if the FIFO 302 is empty and the transfer is incomplete. An MP DMA FIFO Not Empty bit is cleared in the status register is set to indicate the FIFO array 402 is empty. The transfer may resume when the FIFO 302 begins to fill and the MP DMA FIFO Not Empty bit is set.

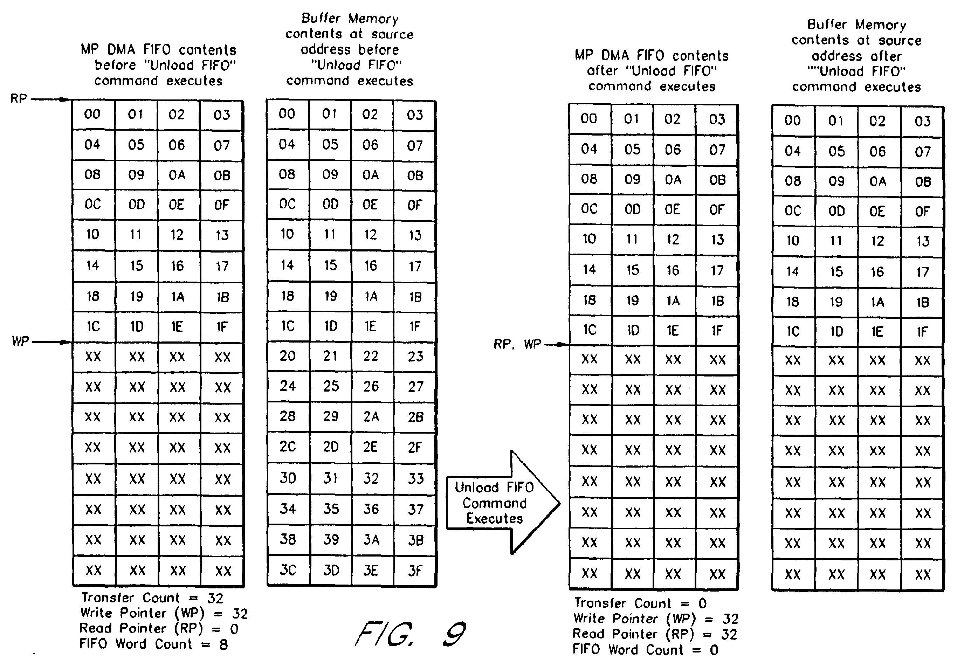

Figure 9 illustrates one example of an Unload FIFO command operation. The write pointer (WP) 410 is currently set to "32" and the read pointer (RP) 412 is set to "0". The FIFO word count, indicating how many FIFO word locations have been used, is at "8," indicating that there are 8 words in the FIFO array 402. The Buffer Memory transfer counter 406 is loaded with "32", indicating 32 bytes are to be transferred from the FIFO array 402 to the buffer memory 112. For clarity, in the present example, the FIFO array 402 is loaded with sequential numbers, though the actual buffer memory contents does not affect the operation of the Unload FIFO command.

Once the Unload FIFO command is received by the command register 408, the transfer of 32 bytes from the FIFO array 402 to the buffer memory 112 takes place. The data is read out of the FIFO 302 beginning at the location indicated by the read pointer 412, in this example "0". The read pointer 412 is incremented by 4 as each word is transferred and loaded into the buffer memory 112. This process repeats until the number of bytes specified by the transfer count, in this example 32, is transferred. As illustrated in Figure 9, once the Unload FIFO command is complete, the buffer memory 112 contains the transferred data, the write pointer 410 remains at 32, the read pointer 412 is has been incremented to 32, and the FIFO word count is at 0, indicating that the FIFO is empty. In one embodiment, even though the FIFO array 402 is empty, the data has not been erased from the FIFO array 402.

The Load FIFO with BCRC (Block CRC) Check command transfers data from the buffer memory 112 to the MP FIFO 302 while performing a CRC check. This command is especially useful for transferring disk sectors with associated sector CRCs. The data is loaded into the FIFO array 402 starting at the location defined by the MP FIFO write pointer 410. The number of bytes to be transferred is set in the Buffer Memory transfer counter 406. The buffer memory start source address for the transfer is set in the buffer transfer address register 404. The number of bytes to be transferred is allowed to exceed the size of the FIFO array 402. The Block CRC, which in one embodiment is the last word to be transferred, is checked. If the CRC check indicates that the Block CRC is valid, an MP DMA FIFO CRC Good bit is set in the status register. The Load FIFO with BCRC Check operation will be suspended or paused if the FIFO 302 is full and the transfer is incomplete. The transfer may resume automatically when the FIFO 302 begins to empty.

The pause feature is particularly advantageous for transferring large data blocks greater is size than the FIFO 302, with an associated error detection and/or correction code, from the buffer memory 112. The error detection code may be, by way of example, a CRC. Using conventional techniques, the transfer of data blocks larger than the FIFO array 402 may be disadvantageously performed by treating the large block as several smaller blocks, equal in size to the FIFO array 402. Thus, the large block would be transferred as a series of smaller, separate, transfers. However, this conventional technique can make the calculation of the CRC, which is for the entire block, difficult or slow to perform by requiring reseeding of the CRC accumulator at the start of each FIFO-sized transfer. In contrast, one embodiment of the present invention permits the entire block to be treated as one block, with the CRC accumulated over the course of the transfer, without reseeding.

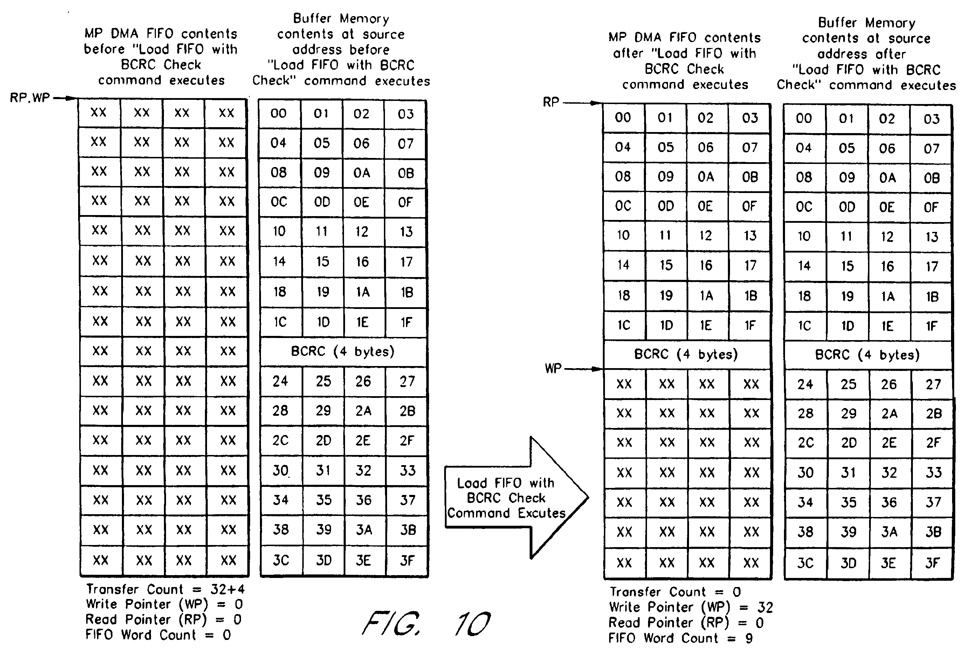

Figure 10 illustrates one example of a Load FIFO with BCRC Check command operation. The FIFO array 402 is assumed to contain "don't care" information, designated by "xx". The write pointer (WP) 410 and read pointer (RP) 412 are set to "0," thereby pointing to the physical beginning address of the FIFO array 402 The FIFO utilization word count is at "0," indicating the FIFO array 402 is empty. The Buffer Memory transfer counter 406 is loaded with "32+4" or 36, indicating 36 bytes, including 32 data bytes and 4 BCRC bytes, are to be transferred from the buffer memory 112 to the FIFO array 402. For clarity, in the present example, the buffer memory 112 is loaded with sequential numbers, though, in one embodiment, the actual buffer memory contents does not affect the operation of the Load FIFO with BCRC Check command.

Once the Load FIFO with BCRC Check command is received by the command register 408, the transfer of 32 data bytes and 4 BCRC bytes from the buffer memory 112 to the FIFO array 402 takes place. The buffer memory data and BCRC is written to the FIFO 302 beginning at the location indicated by the write pointer 410, in this example "0". The write pointer 410 is incremented as each byte is transferred and loaded into the FIFO array 402. This process repeats until the number of bytes specified by the transfer count, in this example 36, is transferred. The BCRC is checked during the transfer, and if the CRC check indicates that the CRC is valid, the MP DMA FIFO CRC Good bit is set in the status register. As illustrated in Figure 10, once the Load FIFO with BCRC Check command is complete, the FIFO array 402 contains the transferred data, the write pointer 410 has been incremented to 36, the read pointer 412 remains at 0, and the FIFO word count is at 9. In one embodiment, the transferred data also remains in the buffer memory 112.

The Unload FIFO with BCRC Generation command transfers data from the MP FIFO 302 to the buffer memory 112 while generating a Block CRC. The transfer begins starting at the location defined by the MP FIFO read pointer 412. The number of bytes to be transferred is set in the Buffer Memory transfer counter 406. The buffer memory start destination address for the transfer is set in the buffer transfer address register 404. The last word to be transferred is a dummy word and is replaced with a block CRC calculated by the CRC engine 132. The number of bytes to be transferred is allowed to exceed the size of the FIFO array 402. The Unload FIFO with BCRC Generation operation will be suspended or paused if the FIFO 302 is empty and the transfer is incomplete. The transfer may resume automatically when the FIFO 302 begins to fill.

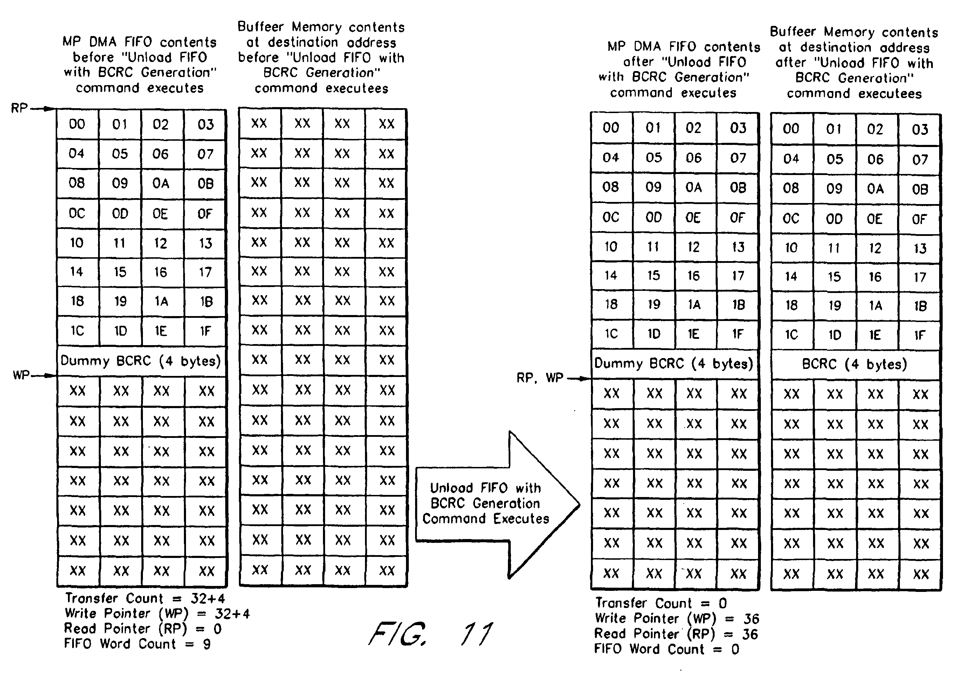

Figure 11 illustrates one example of an Unload FIFO with BCRC Generation command operation. The buffer memory 112 is assumed to contain "don't care" information, designated by "xx". For clarity, in the present example, the FIFO array 402 is loaded with 32 bytes of sequential numbers. In addition, the 4 bytes following the data "contain" a dummy BCRC. That is, the BCRC for the 32 data bytes at FIFO addresses 0-31 has not been calculated yet, but for FIFO management purposes, the write pointer 410 is set to 36, as if address locations 32-35 contained an actual BCRC. The read pointer (RP) 412 is set to "0". The FIFO utilization word count, indicating how many FIFO word locations have been used, is at "9," indicating that there are 9 words in the FIFO array 402. The Buffer Memory transfer counter 406 is loaded with "32+4," or 36, indicating 36 bytes are to be transferred from the FIFO array 402 to the buffer memory 112.

Once the Unload FIFO with BCRC Generation command is received by the command register 408, the transfer of 32 bytes from the FIFO array 402 to the buffer memory 112 takes place. The data is read out of the FIFO 302 beginning at the location indicated by the read pointer 412, in this example "0". The read pointer 412 is incremented as each word is transferred and loaded into the buffer memory 112. The BCRC is continuously calculated during this transfer. This process repeats until the number of bytes specified by the transfer count, minus the 4 bytes for the BCRC data, is transferred. In this example, 32 bytes are transferred from the array 402. The last 4 bytes transferred to the buffer memory 112 contains the BCRC data, supplied by the CRC accumulator rather than the FIFO array 402. As illustrated in Figure 11, once the Unload FIFO with BCRC Generation command is complete, the buffer memory 112 contains the transferred data with the associated BCRC. The write pointer 410 remains at 36, the read pointer 412 has been incremented to 36, and the FIFO word count is at 0, indicating that the FIFO is empty. In one embodiment, even though the FIFO array 402 is empty, the data has not been erased from the FIFO array 402.

The Read from Buffer Memory command transfers data 64 bytes of data from the buffer memory 112 to the MP FIFO 302. The data is loaded into the FIFO array 402 starting at the beginning or zero address of the FIFO array 402. The buffer memory start source address for the transfer is set in the buffer transfer address register 404. In one embodiment, the read pointer 412 and the transfer counter 406 are automatically initialized using default values. Thus, rather than having to go through a lengthy setup process, one command quickly initializes the counters. In addition, in one embodiment, no CRC check is performed. Thus, the Read from Buffer Memory command, which automatically loads 64 bytes at the start of the FIFO array 302, allows sequential pages to be quickly loaded without having the overhead time associated with managing the FIFO pointers. This command permits a processor, such as the microprocessor 108 or the microcontroller 120, to quickly perform FIFO loads to examine data stored in the buffer memory at 64 byte intervals. In one embodiment, no CRC is performed during this transfer.

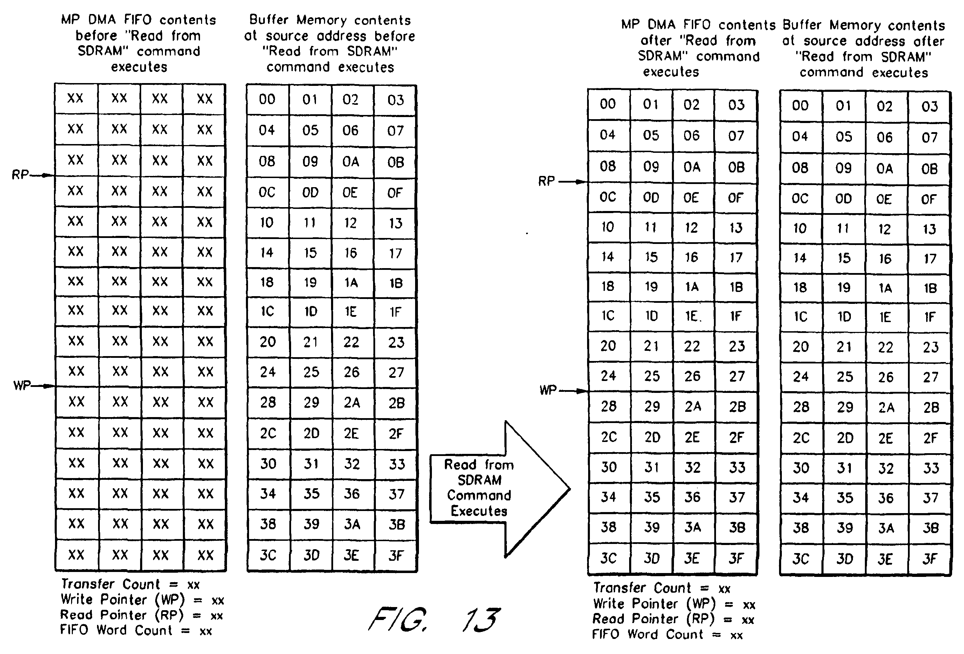

Figure 13 illustrates one example of a Read from Buffer Memory command operation. The FIFO array 402 is assumed to contain "don't care" information, designated by "xx". The write pointer (WP) 410, read pointer (RP) 412, transfer counter 406, and word count, based on the utilization counter 414, are automatically initialized with default values. For clarity, in the present example, the buffer memory 112 is loaded with sequential numbers, though, in one embodiment, the actual buffer memory contents does not affect the operation of the Read from Buffer Memory command.

Once the Read from Buffer Memory command is received by the command register 408, the automatic transfer of 64 bytes from the buffer memory 112 to the FIFO array 402 takes place. The buffer memory data is written to the FIFO array 402 beginning at first FIFO memory location. All 64 bytes are transferred. As illustrated in Figure 13, once the Read from Buffer Memory command is complete, the FIFO array 402 contains the transferred data. In one embodiment, the transferred data also remains in the buffer memory 112.

The Write to Buffer Memory command transfers the entire 64 byte content of the FIFO array 402 to the buffer memory 112. The data is loaded into the FIFO array 402 starting at the beginning or zero address of the FIFO array 402, The buffer memory start destination address for the transfer is set in the buffer transfer address register 404. In one embodiment, the Write to Buffer Memory command does not use the write pointer 410, the read pointer 412, or the transfer counter 406. Thus, the Write from Buffer Memory command, which automatically unloads 64 bytes at the start of the FIFO array 302, allows sequential pages to be quickly transferred to the buffer memory 112 without having the overhead time associated with managing the FIFO pointers. In one embodiment, no CRC is performed during these transfers.

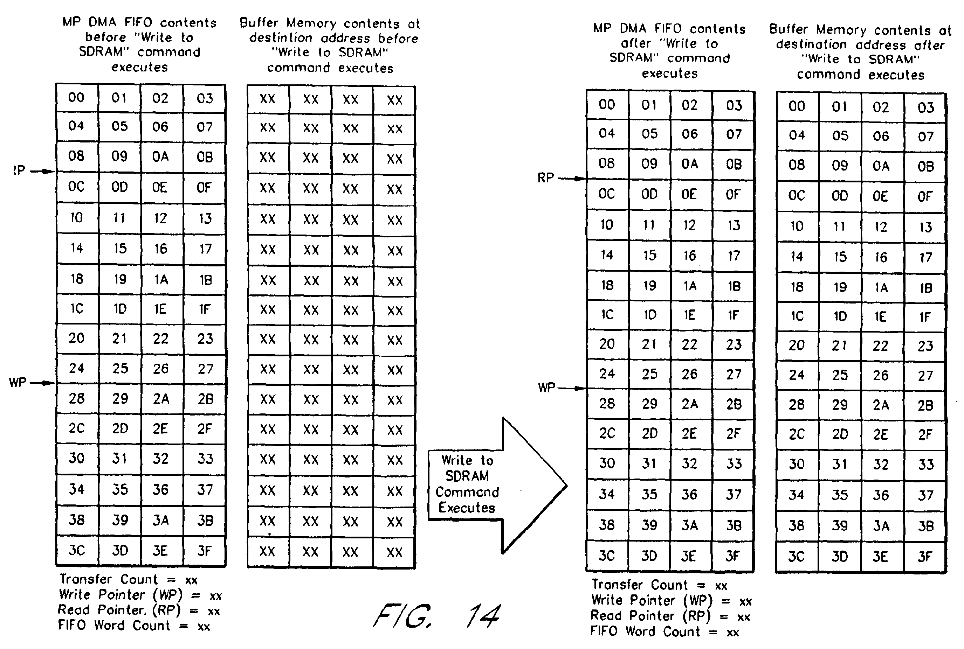

Figure 14 illustrates one example of a Write to Buffer Memory command operation. The buffer memory 112 is assumed to contain "don't care" information, designated by "xx". The write pointer (WP) 410, read pointer (RP) 412, transfer counter 406, and utilization counter 414 are automatically initialized to default values. For clarity, in the present example, the FIFO array 402 is loaded with sequential numbers, though, in one embodiment, the actual contents do not affect the operation of the Write to Buffer Memory command.

Once the Write to Buffer Memory command is received by the command register 408, the automatic transfer of 64 bytes from the FIFO array 402 to the buffer memory 112 takes place. The 64 bytes of FIFO data is automatically written to the buffer memory 112 beginning at the address stored in the buffer transfer address register 404. As illustrated in Figure 14, once the Write to Buffer Memory command is complete, the buffer memory 112 contains the transferred data, and the write pointer 410 and the read pointer 412 are unahered. In one embodiment, the transferred data also remains in the FIFO array 402.

The Select FCP (Fibre Channel Protocol) CMD 2 bit (6) is used in conjunction with the Fetch Current FCP command and the Update Current FCP Command Pointer command. When the Fetch Current FCP command is executed, the current FCP command is transferred from the command buffer in the buffer memory 112 to the MP FIFO array 402. In one embodiment, this transfer is performed automatically, without processor intervention, once the FIFO command is written to the command register 408.

As discussed in greater detail below, the state machine 418 executes the Fetch Current FCP command by executing a Clear FIFO sequence, clearing the pointers and utilization counter, and then copying the FCP Command Fetch Address to the MP FIFO buffer memory transfer address register 404. The Select FCP CMD 2 bit (6) determines which of the two fetch addresses, FCP Command 1 Fetch Address or FCP Command 2 Fetch Address, will be used to fetch the current FCP command. The provision of two fetch addresses, FCP Command 1 Fetch Address or FCP Command 2 Fetch Address, advantageously allow two command buffers to be present in the buffer memory 112 The FCP Command 1 Fetch Address and FCP Command 2 Fetch Address are correspondingly stored in the FCP Command 1 Fetch Address register 420 and the FCP Command 2 Fetch Address register 422. The registers 420, 422 contain the corresponding FCP Command Frame Table base, FCP Command fetch address frame pointer, and 64 byte command frame start.

The state machine 418 then sets the MP FIFO buffer memory transfer counter 406 to 60, which is the size, in bytes, of an FCP command, excluding the associated CRC and buffer length field. The buffer length field is loaded into the MP FIFO 302 beginning at the top, or zero address location, of the FIFO array 402 Thus, the buffer length field may be quickly and automatically located for use by processing elements, such as the microcontroller 120. In one embodiment, the buffer length field is at a fixed location or spacing relative to the FCP command header. The buffer length field may be used to locate the CRC, which is checked to determine if the frame is corrupted. In one embodiment, the FCP command frame is stored in the buffer memory 112 with the CRC located above the buffer length field, as illustrated in Figure 7. A Load FIFO with BCRC Check command is then automatically executed. In one embodiment, the Interruption Upon Complete bit is set as well.

Thus, by having the state machine automatically perform the complex task of reading in and checking an FCP command without requiring further microprocessor or microcontroller intervention, the processing burden of the microprocessor 108 and the microcontroller 120 is greatly reduced. In addition, the reading of the FCP command is accomplished more quickly and efficiently.

The Update Current FCP Command Pointer command performs the steps needed to advance a Current Command Fetch address counter or register. First, the Fetch Address pointer is incremented by the command size, which is 64. The Select FCP CMD 2 bit (6) determines which of the FCP Command 1 Fetch Address and FCP Command 2 Fetch Address will be used. The MP FIFO command complete interrupt is then generated. The Command count is then decremented.

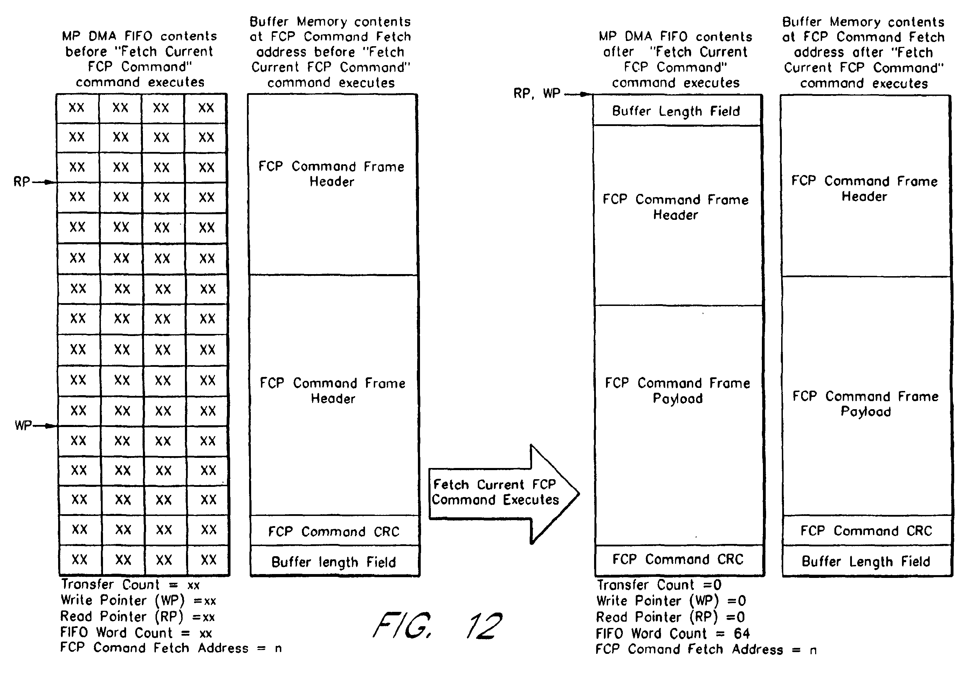

Figure 12 illustrates one example of a Fetch Current FCP command operation. The FIFO array 402 is assumed to contain "don't care" information, designated by "xx". The write pointer (WP) 410, read pointer (RP) 412, and word count are also "don't cares." The buffer memory 112 is loaded with an FCP Command frame, including 6 words for the frame header, 8 words for the frame payload, 1 word for the FCP Command CRC, and a 1 word buffer length field, for a total of 64 bytes.

Once the Fetch Current FCP command is received by the command register 408, the automatic transfer of 64 bytes from the buffer memory 112 to the FIFO array 402 takes place. The transfer is from the buffer memory location indicated by the corresponding FCP Command Fetch Address. First, the buffer length field is automatically loaded at the beginning or top address of the FIFO array 402. Thus, the buffer length field will be the first word later unloaded from the FIFO array 402. The FCP Command Frame header is then transferred, followed by the frame payload and the CRC, which is checked. As illustrated in Figure 12, once the Fetch Current FCP command is complete, the FIFO array 402 contains the transferred data, with the buffer length field on top. The write pointer 410 and the read pointer 412 remain at 0, and the FIFO word count is at 64, indicating the FIFO array 402 is full.

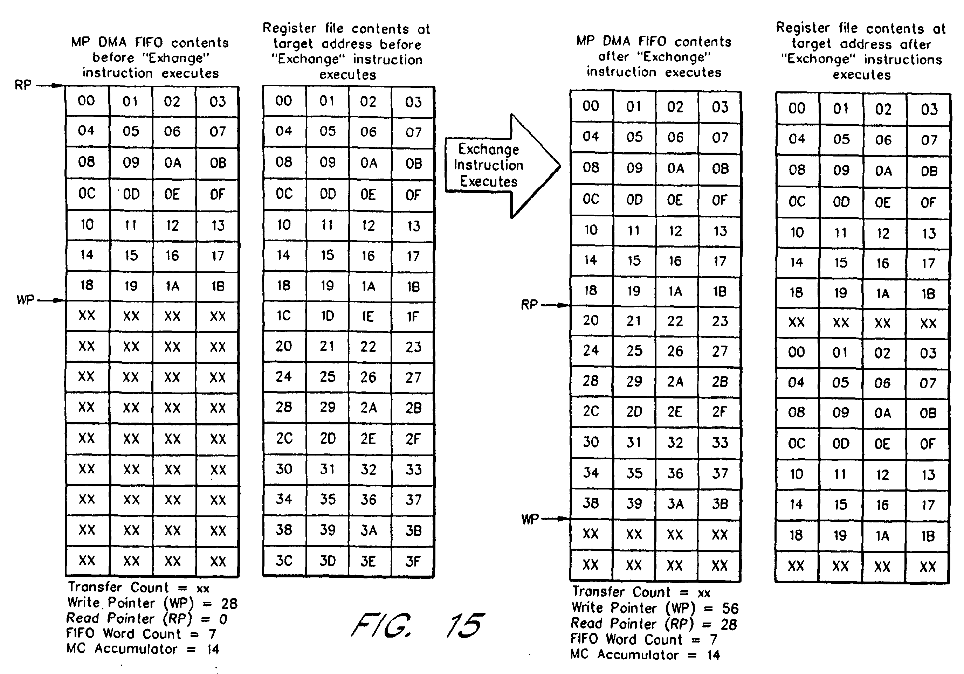

Figure 15 illustrates one embodiment of a context switching operation. This example illustrates swapping or transferring a context previously stored in the FIFO array 402 to an exemplary register file, while transferring the context from the register file to the FIFO array 402. The register file may be one of any number of register files, and may be used to contain a variety of data or contexts, such as an FCP header, a transfer count status, and so on. In the present example, the FIFO array 402 contains a first context stored in the first 28 bytes of the array. The remainder of the array 402 is assumed to contain "don't care" information, designated by "xx". The write pointer (WP) 410 is at 28, that is, the write pointer 410 will cause the next data received by the FIFO array 402 to be written in the memory location following the first context. The read pointer (RP) 412 is set to "0," thereby pointing to the physical beginning address of the FIFO array 402. The FIFO utilization word count, indicating how many FIFO word locations have been used, is at "7." The microcontroller (MC) accumulator is set to ''14." The Buffer Memory transfer counter 406 is a "don't care," as data is not being transferred to or from the buffer memory 112 in this operation. The register file 1502 contains a second context, including 28 bytes. While, in this example, the first and second contexts are the same size, they could have different sizes as well. For clarity, in the present example, the FIFO array 402 is loaded with sequential numbers 00-1B, while the register file 1502 is loaded with sequential numbers 20-3B.

An MC Exchange Load FIFO command is used to perform context switching or swapping. Once an MC EXCHANGE Load FIFO command is issued, the context stored in the FIFO array 402 is swapped with the context stored in the register file 1502. In the illustrated example, the first context is swapped out, but also is not erased from the FIFO array 402. However, if desired, the first context could be overwritten in the FIFO array 402 during a swap operation, while the swapped out copy of the first context would be stored in the register file 1502. For example, if the context being swapped in was larger than the unused FIFO locations, all or part of the first context stored in the FIFO array 402 may be overwritten. Thus, in one embodiment, if the context being swapped in from the register file is 64 bytes, the first context in the FIFO array 402 would be completely overwritten.

As illustrated in Figure 15, in this example, the context transferred from the register file 1502 to the FIFO array 402 is stored immediately after the first context The register file 1502 now contains the first context. The write pointer (WP) 410 has advanced to 56, reflecting the additional data written to the FIFO array 402. The read pointer (RP) 412 has advanced to 28, reflecting the fact that 28 bytes have been read from the array 402. The FIFO word count remains at 7, as the same number of words were read out of the array 402 as were written to the array 402 during the swap.

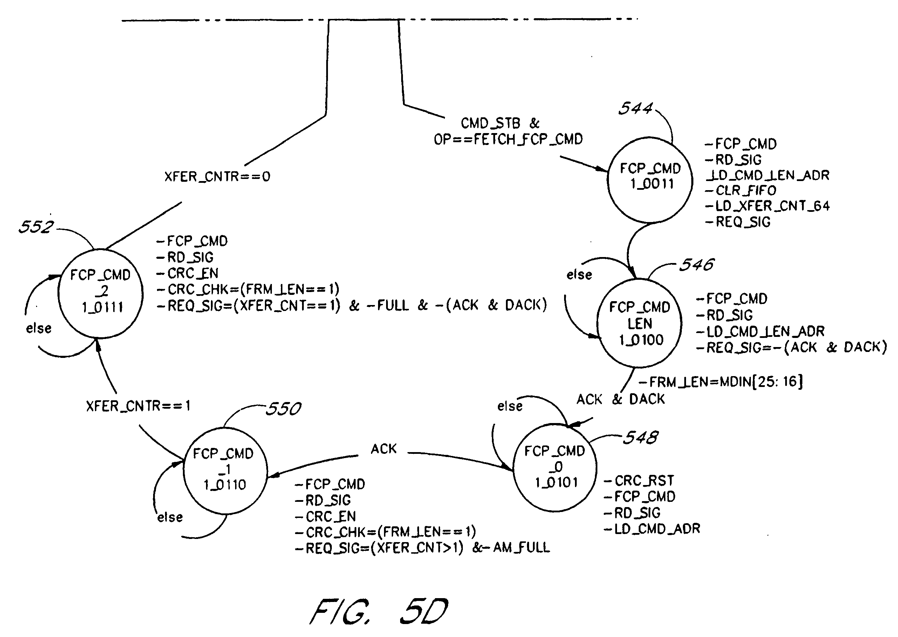

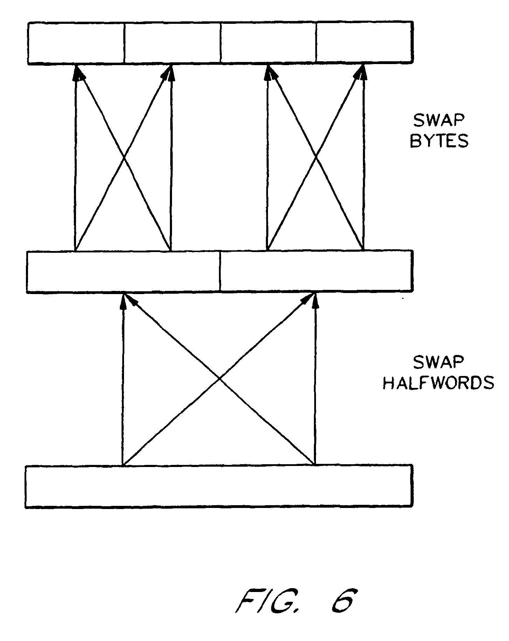

One embodiment of the present invention optionally performs data translation when data is transferred between the MP FIFO 302 and the buffer memory 112. As illustrated in Figure 6, two 16 bit halfwords within a 32 bit word may be swapped, and two bytes within each halfword may be swapped. Bit 5 of the command register 408 is used to cause the halfwords within a word to be swapped. Bit 4 is used to cause bytes within halfwords to be swapped. These swapping functions advantageously allow data formatted in a big-endian format to be converted to a little endian format. Similarly, these swapping functions advantageously allow data formatted in a little-endian format to be converted to a big-endian format. For example, Fibre Channel conventionally uses the little-endian format, while the processors 106, 120 may use the big-endian format, In addition, the swapping function allows words transferred in or out of the FIFO 302 to be realigned on different boundaries.

Additional command information, including, buffer memory access direction, transfer count values, the source of buffer memory addresses, and comments, is provided in Table 3, below:

**Table 3**

| COMMAND | BUFFER MEMORY ACCESS DIRECTION | TRANSFER COUNT | BUFFER MEMORY ADDRESS | COMMENTS |
|---|---|---|---|---|
| NO OPERATION | NONE | 0 | N/A | |
| CLEAR FIFO | NONE | 0 | N/A | CLEAR FIFO READ/WRITE POINTERS & UTILIZATION COUNTER |
| STOP FIFO | NONE | 0 | N/A | FORCE STATE MACHINE TO IDLE STATE |
| LOAD FIFO | READ | XFER CNT REG | BUFFER XFER ADDR | |
| UNLOAD FIFO | WRITE | XFER CNT REG | BUFFER XFER ADDR | |
| LOAD FIFO W BCRC | READ | XFER CNT REG | BUFFER XFER ADDR | CHECK CRC WHILE LOADING FIFO |
| UNLOAD FIFO W BCRC | WRITE | XFER CNT REG | BUFFER XFER ADDR | GENERATE CRC WHILE UNLOADING FIFO |
| READ | WRITE | 64 | BUFFER XFER ADDR | |
| WRITE | WRITE | 64 | BUFFER XFER ADDR | |
| FETCH FCP COMMAND | READ | 64 | FCP FETCH ADDR PTR | CHECK CRC |
| UPDATE FCP POINTERS | NONE | 0 | N/A | UPDATE FCP ADDRESS AND COUNT & CLEAR COMMAND COMPLETE INTERRUPT |

In one embodiment, one or more of the commands listed above may be issued while another command is executing. For example, in one embodiment, the No Operation (NOP), the Clear FIFO, and the Stop FIFO commands can be issued while other commands are being executed.

The state machine 418 controls controller memory access resources, including the MP FIFO pointers, the MP FIFO buffer memory transfer counter 406, the Fibre Channel protocol (FCP) fetch address counters, the CRC accumulators, and the frame length counter. The state machine 418 can initialize these resources, set modes, and acts as the SDRAM requestor.

Figures 5A-0 illustrate one embodiment of the MP FIFO state machine 418. Beginning at an Idle state 514, upon receipt of an Unload FIFO command, the state machine 418 proceeds to state 502, whereupon the process of unloading the FIFO 302 begins. If the FIFO 302 is not empty, the state machine 418 proceeds to state 504. The FIFO 302 is then continuously unloaded until only one word remains in the FIFO array 402 and the transfer count equals 1. The state machine 418 then proceeds to a state 506 where the last FIFO word is unloaded. Thus, when both acknowledge (ACK) signal from the MP FIFO arbiter and the data acknowledge (DACK) signal from the SDRAM controller active, then the last piece of data in the FIFO array 402 is transferred. The transfer count is set to 0 and the state machine 41 returns to the Idle state 514.

If an Unload FIFO with CRC command is received while in the Idle state 514, the state machine 418 proceeds to a state 508. The Unload FIFO with CRC command is used to write data from the FIFO array 402 to the buffer memory 112 while generating an associated CRC. In one embodiment, the CRC will be the last word written to the buffer memory 112. If the FIFO array 402 is empty, the state machine 418 remains in the Unload FIFO state 508. However, if the FIFO array 402 is not empty, the state machine 418 proceeds to a Unload FIFO state 510. The CRC calculation is performed as the FIFO array 402 is being unloaded and written into the SDRAM buffer memory. When the transfer count equals 1, the state machine 418 proceeds to an Unload FIFO state 512. When the CRC calculation is complete, the CRC data is transferred to the SORAM buffer memory 112, and the transfer count is set to 0. The state machine 418 then proceeds back to the Idle state 514.

If the state machine 418 receives a Load FIFO command, then the state machine 418 proceeds from Idle state 514 to a Load FIFO state 516. The Load FIFO command is used to read data from the buffer memory into the FIFO array 402. If the state machine 418 is not full, then the state machine 418 proceeds to state 518 upon receipt of an MP FIFO acknowledge signal from the arbiter. The state machine 418 then causes data to be transferred from the buffer memory to 112 the FIFO array 402 until the transfer count is equal to 1, and the MP FIFO 302 generates an almost full signal. If the transfer count is equal to 1 and the FIFO array 402 is almost full, meaning that there is room for only one more data word, the state machine 418 proceeds to a Load FIFO state to 520. If the transfer counter is equal to 1, and the MP FIFO 302 generates a full signal, then upon receipt of an MP FIFO acknowledge signal from the arbiter and a DACK signal from the SORAM controller, the last word is loaded into the FIFO array 402, and the state machine 418 proceeds back to the Idle state 514.

Upon receipt of a Load FIFO With CRC command, the state machine 418 proceeds to a Load FIFO with CRC state 522. The Load FIFO With CRC command is used to read data from the buffer memory 112, while checking the CRC. In one embodiment, the CRC is the last word to be transferred. At the state 522. if the MP FIFO 302 is not full, the MP FIFO read signal is activated, as is an MP FIFO CRC enable signal. Upon receipt of an MP FIFO acknowledge signal, the state machine 418 proceeds to a Load FIFO With CRC state 524. The state machine 418 proceeds to load data from the SDRAM buffer memory 112 into the FIFO array 402 until an almost full signal is asserted and the transfer count is greater than one. During this period, the CRC is calculated. The state machine 418 then proceeds to a load FIFO state with CRC 526. The state machine 418 causes the CRC to be loaded into the FIFO array 402. The transfer count is set to one, and the state machine 418 proceeds back to Idle state 514.

Upon receiving a Write to Buffer Memory command, the state machine 418 proceeds from the Idle state 514 to the Write state 528. As previously described, the Write to Buffer Memory command is used to write data from the FIFO array 402 to the buffer memory 112. If the FIFO array 402 is not empty, the state machine 418 proceeds to a state 530 upon receipt of an acknowledge signal from the MP FIFO arbiter. The FIFO array 402 is then unloaded, and the unloaded data is written to the buffer memory 112. The FIFO unloading process continues until only one word remains in the FIFO memory and the transfer count equals one. The state machine 418 then proceeds to a state 532 where the last FIFO word is unloaded. Then, when both acknowledge (ACK) signal from the MP FIFO arbiter and the data acknowledge (DACK) signal from the SDRAM controller active, the last piece of data in the FIFO is transferred. The transfer count is set to 0 and the state machine 418 returns to the Idle state 514.

Upon receiving an Update FCP Pointers command, the state machine 418 proceeds from the Idle state 514 to the FCMD PTR state 528. A Command Pointer Increment signal is activated for one clock which updates the FCP address and count. The state machine 418 the proceeds to state 536 and clears the Command Complete interrupt. The state machine 418 then returns to the Idle state 514.

Upon receiving a Read Buffer Memory command, the state machine 418 proceeds from the Idle state 514 to a Read state 538 and asserts an SORAM read signal. If the FIFO is not full, the state machine 418 proceeds to a state 540 upon receipt of an acknowledge signal from the MP FIFO arbiter. Data is then read from the buffer memory 112 into the FIFO array 402. The read process continues until the FIFO memory is almost full and the transfer count equals 1. The state machine 418 then proceeds to a state 542 where one more word is read from the buffer memory 112 into the FIFO. Then, when both acknowledge (ACK) signal from the MP FIFO arbiter and the data acknowledge (DACK) signal from the SDRAM controller are active, the transfer count is set to 0 and the state machine 418 returns to the Idle state 514.

Upon receiving a Fetch FCP command, the state machine 418 proceeds from the Idle state 514 to a FCP Command state 544. The state machine appropriately sets the FCP_CMD, RD_SIG, LD_CMD_LEN_ADR, CLR FIFO, LD_XFER CNT 64, and REO SIG, signals to prepare to get the packet length data located at the end of the packet. Thus, the transfer address is loaded with the frame length address. In one embodiment, the frame length address includes a base address added to a segment size. Proceeding to a state 546, the frame length data is retrieved. When both acknowledge (ACK) signal from the MP FIFO arbiter and the data acknowledge (DACK) signal from the SDRAM controller active, the frame length is placed in the FIFO array 402. Proceeding to a state 548, the CRC seed is reset and the transfer address is set to the start address, or base address, of the FCP command frame. When the acknowledge signal drops, the state machine proceeds to a state 550. The transfer of the packet from the buffer memory 112 begins, and the CRC accumulation begins. The transfer continues until the transfer count is equal to one. The state machine 418 then proceeds to a state 552, and the last word is transferred. The transfer counter is now equal to zero, and the state machine proceeds to the Idle state 514.

While certain preferred embodiments of the invention have been described, these embodiments have been presented by way of example only, and are not intended to limit the scope of the present invention. Accordingly, the breadth and scope of the present invention should be defined only in accordance with the following claims.

## Claims

1. A mass storage device controller for interfacing a mass storage device (106) to a computer (104) via a bus (116), the mass storage device controller (102) comprising a buffer memory (112) configured to receive data from the mass storage device and to receive data from the bus, the mass storage device controller comprising:
at least one processor (108, 120); and
a memory circuit (302) coupled to the buffer memory and to the processor, the memory circuit configured to operate as a first-in-first-out memory during at least a first transfer of data between the memory circuit and the buffer memory, the memory circuit configured to operate as a random access memory during at least a second transfer of data between the memory circuit and the at least one processor.

2. The mass storage device controller as defined in Claim 1, wherein at least one of the first transfer or the second transfer is paused when the memory circuit (302) is full.

3. The mass storage device controller as defined in Claim 1, wherein the memory circuit (302) is configured to burst data to the buffer memory (112).

4. The mass storage device controller as defined in Claim 1, wherein the memory circuit (302) is automatically reloaded while data is bursted from the memory circuit to the buffer memory (112).

5. The mass storage device controller as defined in Claim 1, wherein the memory circuit (302) is coupled to a plurality of disk drive controller register files.

6. The mass storage device controller as defined in Claim 1, wherein the memory circuit (302) has a storage capacity and is configured to accept a transfer command which specifies a transfer size greater than the memory circuit storage capacity.

7. The mass storage device controller as defined in Claim 1, wherein the bus (116) is an I/O interface and wherein the I/O interface is a Fibre Channel interface.

8. The mass storage device controller as defined in Claim 1, further comprising a state machine (418) coupled to the at least one processor (108, 120), to the buffer memory (112), and to the memory circuit (302), the state machine configured to cause a Fibre Channel control block to be transferred from the buffer memory to the memory circuit and to cause an error detection code to be checked.

9. The mass storage device controller as defined in Claim 1, wherein the mass storage device (106) is a magnetic disk drive.

10. The mass storage device controller as defined in Claim 1, wherein:
the bus (116) comprises an I/O interface;
the mass storage device controller (102) further includes a disk drive interface (136) coupled to a disk drive (106) and an I/O interface (124) coupled to the bus;
the buffer memory (112) is coupled to transfer data to and from the disk drive interface and to and from the I/O interface; and
the mass storage device controller is further **characterized by**:
the at least one processor (108, 120) comprising:
a first processor (108) used to at least control the disk drive interface; and
a second processor (120) used to at least perform low level tasks;
and
the memory circuit (302) comprising:
a DMA port (210) coupled to the buffer memory;
a register access port (408) coupled to the first processor and the second processor;
a random access port (404) coupled to the first processor and the second processor, and
a read pointer (412) and a write pointer (410) accessible by at least one of the first processor and the second processor.

11. The mass storage device controller as defined in Claim 10, further comprising a memory utilization counter (414).

12. The mass storage device controller as defined in Claim 10, wherein the read pointer (412) and the write pointer (410) may be loaded by either of the first processor (108) or the second processor (120).

13. The mass storage device controller as defined in Claim 10, further comprising an error detection module (424) which verifies a cyclic redundancy code (CRC) for data written to the buffer memory (112).

14. The mass storage device controller as defined in Claim 1, the memory circuit (302) being loadable using direct memory access.

15. The mass storage device controller as defined in Claim 14, further comprising a Fibre Channel interface (116) coupled to the buffer memory (112), wherein data is transferred between the buffer memory and the Fibre Channel interface via the memory circuit (302).

16. The mass storage device controller as defined in Claim 14, further comprising a control circuit (122) coupled to the buffer memory (112) and the memory circuit (302), wherein the control circuit is configured to transfer a Fibre Channel control block from the buffer memory to the memory circuit.

17. The mass storage device controller as defined in Claim 14, wherein the memory circuit (302) is configured to provide direct frame access to at least a first frame by the at least one processor (108).

18. The mass storage device controller as defined in Claim 14, wherein the memory circuit (302) is sized to hold a Fibre Channel control block and an associated error detection code.

19. The mass storage device controller as defined in Claim 14, wherein the memory circuit (302) has at least four ports.

20. The mass storage device controller as defined in Claim 14, wherein the memory circuit (302) comprises a register access interface (408) and a direct access interface (404).

21. The mass storage device controller as defined in Claim 14, further comprising an error detection module (424) which checks a cyclic redundancy code (CRC) for data transferred from the buffer memory (112) to the memory circuit (302).

22. The mass storage device controller as defined in Claim 14, wherein the memory circuit (302) further comprises a write pointer (410) and a read pointer (412) loadable and readable by the at least one processor (108, 120).

23. The mass storage device controller as defined in Claim 14, further comprising a buffer memory address register (404).

24. The mass storage device controller as defined in Claim 14, wherein the memory circuit (302) is configured to receive at least processor program code.

25. The mass storage device controller as defined in Claim 14, wherein the memory circuit (302) further comprises a fetch address register (420, 422).

26. The mass storage device controller as defined in Claim 14, wherein:
the buffer memory (112) is configured as a random access memory; and comprising
a Fibre Channel interface (116) coupled to the buffer memory, the buffer memory circuit being configured to receive a Fibre Channel control block from the Fibre Channel interface; and
a state machine (418) coupled to the at least one processor (108, 120), to the memory circuit (302), and to the buffer memory, the state machine configured to receive a command from the at least one processor, and to transfer the Fibre Channel control block between the buffer memory and the memory circuit in response to the command.

27. The mass storage device controller as defined in Claim 14, wherein the buffer memory (112) is configured to provide direct frame access to a Fibre Channel frame.

28. The mass storage device controller as defined in Claim 1, wherein:
the mass storage device controller (102) is coupled to a host computer (104) via the bus (106);
the memory circuit (302) is configured to operate as a first-in-first-out memory during at least a first transfer of data between the memory circuit and the buffer memory (112); and
the memory circuit is configured to operate as a random access memory during at least a second transfer of data between the memory circuit and the at least one processor (108).

29. The mass storage controller as defined in Claim 28, further comprising a microcontroller (120) coupled to the memory circuit (302), the memory circuit having at least two ports to enable the microcontroller and the at least one processor (108) to access the memory circuit simultaneously.

30. The mass storage device controller as defined in Claim 1, wherein:
the buffer memory (112) is configured to hold context information;
the at least one processor (108, 120) comprises a first disk controller processor (108) coupled to the buffer memory, the first disk controller processor being configured to perform operations in accordance with the context information stored in the buffer memory;
the memory circuit (302) operates as a random access memory in a first mode and operates as a fiirst-in-first-out memory in a second mode, the memory circuit being useable to both store alternate context information and to buffer disk data; and comprising
a swapping circuit configured to swap at least a portion of the context information stored in the buffer memory with the alternate context information stored in the memory circuit in response to at least a first event.

31. The mass storage device controller as defined in Claim 1, wherein:
the mass storage device controller (102) is coupled to a disk drive (106) and to a host computer (104);
the mass storage device controller manages data being transferred between the disk drive and the host computer, and wherein
the buffer memory (112) is configured to hold context information;
the at least one processor (108, 120) is a first disk controller processor (108) coupled to the buffer memory and is configured to perform operations in accordance with the context information stored in the buffer memory;
the memory circuit (302) stores alternate context information in a first mode of operation as a random access memory and buffers disk data in a second mode of operation as a first-in-first-out memory; and
a swapping circuit is configured to swap at least a portion of the context information stored in the buffer memory with the alternate context information stored in the memory circuit in response to at least a first event.

32. A method of accessing and storing data in a mass storage device controller (102) having a buffer memory (112), at least one processor (108, 120), and a memory circuit (302), comprising the steps of
receiving, at the buffer memory, data from the mass storage device and from a bus (116),
transferring data between the memory circuit and the buffer memory in a first-in-first-out mode; and
transferring data between the memory circuit and the at least one processor in a random access mode.

33. A method of accessing and storing data as defined in Claim 32, wherein the memory circuit (302) is a multiported memory circuit located on the mass storage device controller, and comprising the steps of:
transferring data from the buffer memory to the multiported memory circuit (302) using a first port of the multiported memory, wherein the first port is a first-in-first-out port, and wherein the multiported memory is configurable to operate in a first-in-first-out memory mode and to operate in a random access memory mode;
transferring data between the multiported memory and a first disk controller processor (108) using a second port of the multiported memory, wherein the first disk controller processor is configured to perform high-level tasks; and
transferring data between the multiported memory and a second disk controller processor (120) using a third port of the multiported memory, wherein the second disk controller processor is configured to perform low-level tasks.

34. The method of accessing and storing data as defined in Claim 32, further comprising modifying the data stored in the multiported memory (302).

35. The method of accessing and storing data as defined in Claim 32, further comprising reading the modified data out of the multiported memory (302).

36. The method of accessing and storing data as defined in Claim 32, further comprising bursting data from the multiported memory (302) to the buffer memory (112).

37. The method of accessing and storing data as defined in Claim 32, further comprising transferring data from the buffer memory (112) to the multiported memory (302) while checking an error detection code associated with the data.

38. The method of accessing and storing data as defined in Claim 32, further comprising:
storing a disk format table in the multiported memory (302); and
accessing the stored disk format table using the second port of the multiported memory.

39. The method of accessing and storing data as defined in Claim 32, further comprising accessing program code located in the multiported memory (302).

40. The method of accessing and storing data as defined in Claim 32, further comprising providing direct frame access to a Fibre Channel frame stored in the multiported memory (302).

41. The method of accessing and storing data as defined in Claim 32, comprising the steps of
transferring a buffer length field associated with a data packet from the buffer memory (112) to a first location of the multiported memory (302) via the first-in-first-out port of the multiported memory, wherein at least a portion of the buffer length field includes information related to the amount of data being transferred via the data packet;
transferring at least a portion of the data packet from the buffer memory to at least a second location of the multiported memory; and
reading the buffer length field from the multiported memory and then reading the at least a portion of the data packet from the multiported memory.

42. The method of accessing and storing data as defined in Claim 41, wherein a least a portion of the buffer length field is used to locate the position of a CRC within the data packet.

43. The method of accessing and storing data as defined in Claim 32, comprising the steps of:
using the multiported memory (302) in a first mode under the management of the first disk controller processor (108) to temporarily store data being transferred between a disk storage device (106) coupled to the disk controller (102) and a bus (116) coupled to the mass storage device controller;
storing a first context in the buffer memory (112);
using the multiported memory in a second mode to store a second context for later use by the first disk controller processor;
swapping at least a portion of the first context information stored in the buffer memory with at least a portion of the second context information stored in the multiported memory at least partly in response to a first event; and
restoring the swapped at least a portion of the first context information back to the buffer memory at least partly in response to a second event.

44. The method of accessing and storing data as defined in Claim 32, comprising the steps of:
storing a first context in the buffer memory (112);
storing a second context in the multiported memory (302);
using the first disk controller processor (108) to manage a first transfer operation related to the first context, wherein the first transfer operation transfers data from a disk drive to a communication link;
determining that the disk drive (106) is not transferring data to the communication link (116) as fast as the communication link is able to receive data;
suspending the first transfer operation;
swapping the first context from the buffer memory with the second context stored in the multiported memory;
using the first disk controller processor to manage a second transfer operation corresponding to the second context;
restoring the first context to the buffer memory from the multiported memory after completing at least a portion of the second transfer operation;
completing the first transfer operation; and
operating the multiported memory in the first-in-first-out memory mode to transfer disk data between the multiported memory and the buffer memory.

45. A computer system comprising a mass storage device controller according to any one of Claims 1 to 31.

46. A disk drive system, comprising:
a disk drive; and
a controller coupled to the disk drive to control the disk drive and to manage data being transferred between the disk drive and a host computer, the controller including:
a first memory configured to hold context information;
a first disk controller processor configured to perform operations in accordance with the context information stored in the first memory, the first disk controller processor coupled to the first memory;
a second memory configured to act as a random access memory in a first mode and as a first-in-first-out memory in a second mode, the second memory useable to both store alternate context information and to buffer disk data, the second memory coupled to the first memory; and
a swapping circuit configured to swap at least a portion of the context information stored in the first memory with the alternate context information stored in the second memory in response to at least a first event.

## Patentansprüche

1. Steuerung (Controller) für eine Massenspeichereinrichtung um eine Schnittstelle zwischen einer Massenspeichereinrichtung (106) Ober einen Bus (116) zu einem Computer (104) zu bilden, wobei die Steuerung (102) der Massenspeichereinrichtung einen Pufferspeicher (112) aufweist, der so ausgestaltet ist, daß er Daten von der Massenspeichereinrichtung empfängt und Daten von dem Bus empfängt, wobei die Steuerung der Massenspeichereinrichtung aufweist:
zumindest einen Prozessor (108, 120), und
einen Speicherschaltkreis (302), der mit dem Pufferspeicher und mit dem Prozessor verbunden ist, wobei der Speicherschaltkreis so ausgestaltet ist, daß er während zumindest einer ersten Übertragung von Daten zwischen dem Speicherschaltkreis und dem Pufferspeicher als ein First-In-First-Out-Speicher (FIFO) fungiert, wobei der Speicherschaltkreis weiterhin so ausgelegt ist, daß er während zumindest einer zweiten Übertragung von Daten zwischen dem Speicherschaltkreis und dem zumindest einen Prozessor als ein Speicher mit wahlfreiem Zugriff (RAM) arbeitet.

2. Steuerung für eine Massenspeichereinrichtung nach Anspruch 1, wobei zumindest eine der Übertragungen, nämlich der ersten Übertragung oder der zweiten Übertragung, angehalten wird, wenn der Speicherschaltkreis (302) voll ist.

3. Steuerung für eine Massenspeichereinrichtung nach Anspruch 1, wobei der Speicher schaltkreis (302) so ausgestaltet ist, daß er Daten schubweise (als Burst) in den Pufferspeicher (112) verschiebt.

4. Steuerung für eine Massenspeichereinrichtung nach Anspruch 1, wobei der Speicher schaltkreis (302) automatisch neu geladen wird, während Daten schub- bzw. stoßweise aus dem Speicherschaltkreis in den Pufferspeicher (112) verschoben werden.

5. Steuerung einer Massenspeichereinrichtung nach Anspruch 1, wobei der Speicher schaltkreis (302) mit einer Mehrzahl von Registerdateien einer Plattenlaufwerksteuerung verbunden ist.

6. Steuerung für eine Massenspeichereinrichtung nach Anspruch 1, wobei der Speicher schaltkreis (302) eine Speicherkapazität hat und so ausgelegt ist, daß er einen Übertragungsbefehl akzeptiert, der eine Übertragungsgröße angibt, die größer ist als die Speicherkapazität des Speicherschaltkreises.

7. Steuerung für eine Massenspeichereinrichtung nach Anspruch 1, wobei der Bus (116) eine I/O-Schnittstelle ist und wobei die I/O-Schnittstelle eine Schnittstelle zu einem Faserkanal ist.

8. Steuerung für eine Massenspeichereinrichtung nach Anspruch 1, welche weiterhin eine Zustandsmaschine bzw einen endlichen Automaten (418) aufweist, der mit dem zumindest einen Prozessor (108, 120), mit dem Pufferspeicher (112) und mit dem Speicherschaltkreis (302) verbunden ist, wobei die Zustandsmaschine bzw, der endliche Automat so ausgestaltet ist, daß er bewirkt, daß ein Steuerblock des Faserkanals von dem Pufferspeicher in den Speicherschaltkreis übertragen wird, und daß die Oberprüfung eines Fehlererfassungscodes veranlaßt wird.

9. Steuerung für eine Massenspeichereinrichtung nach Anspruch 1, wobei die Massenspeichereinrichtung (106) ein magnetisches Plattenlaufwerk ist.

10. Steuerung für eine Massenspeichereinrichtung nach Anspruch 1, wobei der Bus (116) eine 110-Schnittstelle aufweist,
die Steuerung (102) für die Massenspeichereinrichtung weiterhin eine Schnittstelle (136) eines Plattentaufwerks aufweist, die mit einem Plattenlaufwerk (106) verbunden ist, und eine I/O-Schnittstelle (124) aufweist, die mit dem Bus verbunden ist,
der Pufferspeicher (112) so angeschlossen ist, daß er Daten zu der Plattenlaufwerkschnittstelle und von dieser sowie zu und von der I/O-Schnittstelle überträgt, und
die Steuerung der Massenspeichereinrichtung weiterhin **dadurch gekennzeichnet ist, daß**:
der zumindest eine Prozessor (108, 120) aufweist:
einen ersten Prozessor (108), der verwendet wird, um zumindest die Plattenlaufwerkschnittstelle zu steuern, und
einen zweiten Prozessor (120), der verwendet wird, um zumindest Aufgaben auf niedriger Ebene auszuführen, und daß
der Speicherschaltkreis (302) aufweist:
einen DMA-Anschluß (210), der mit dem Pufferspeicher verbunden ist,
einen Registerzugangsanschluß (408), der mit dem ersten Prozessor und dem zweiten Prozessor verbunden ist,
einen wahlfreien Zugriffsanschluß (404), der mit dem ersten Prozessor und dem zweiten Prozessor verbunden ist, und
einen Lesezeiger (412) und einen Schreibzeiger (410), auf welche durch zumindest einen der beiden, nämlich den ersten Prozessor oder den zweiten Prozessor, zugegriffen werden kann.

11. Steuerung einer Massenspeichereinrichtung nach Anspruch 10, welche weiterhin einen Speichemutzungszähler (414) aufweist.

12. Steuerung einer Massenspeichereinrichtung nach Anspruch 10, wobei der Lesezeiger (412) und der Schreibezeiger (410) entweder durch den ersten Prozessor (108) oder durch den zweiten Prozessor (120) geladen werden können.

13. Steuerung einer Massenspeichereinrichtung nach Anspruch 10, welche weiterhin ein Fehlererfassungsmodul (424) aufweist, welches einen zyklischen Redundanzcode (CRC) für in den Pufferspeicher (112) geschriebene Daten verifiziert.

14. Steuerung einer Massenspeichereinrichtung nach Anspruch 1, wobei der Speicherschaltkreis (302) unter Verwendung eines direkten Speicherzugriffs ladbar ist.

15. Steuerung einer Massenspeichereinrichtung nach Anspruch 14, welche weiterhin eine Faserkanaischnittstelle (116) aufweist, die mit dem Pufferspeicher (112) verbunden ist, wobei Daten zwischen dem Pufferspeicher und der Schnittstelle des Faserkanals über den Speicher schaltkreis (302) übertragen werden.

16. Steuerung einer Massenspeichereinrichtung nach Anspruch 14, welche weiterhin einen Steuerschaltkreis (122) aufweist, der mit dem Pufferspeicher (112) und dem Speicherschaltkreis (302) verbunden ist, wobei der Steuerschaltkreis so ausgestaltet ist, daß er einen Steuer- bzw. Kontrollblock des Faserkanals von dem Pufferspeicher zu dem Speicherschaltkreis überträgt

17. Steuerung einer Massenspeichereinrichtung nach Anspruch 14, wobei der Speicherschaltkreis (302) so ausgestaltet ist, daß er einen direkten Frame-Zugriff auf zumindest einen ersten Frame durch den zumindest einen Prozessor (108) vorsieht.

18. Steuerung einer Massenspeichereinrichtung nach Anspruch 14, wobei der Speicherschaltkreis (302) so bemessen ist, daß er einen Steuerblock des Faserkanals und einen zugehörigen Fehlererfassungscode hält.

19. Steuerung einer Massenspeichereinrichtung nach Anspruch 14, wobei der Speicher schaltkreis zumindest vier Anschlüsse (Ports) hat.

20. Steuerung einer Massenspeichereinrichtung nach Anspruch 14, wobei der Speicherschaltkreis (302) eine Registerzugangsschnittstelle (408) und eine Schnittstelle (404) für direkten Zugriff aufweist.

21. Steuerung einer Massenspeichereinrichtung nach Anspruch 14, welche weiterhin ein Fehlererfassungsmodul (424) aufweist, welches einen zyklischen Redundanzcode (CRC) für Daten überprüft, die von dem Pufferspeicher (112) an den Speicherschaltkreis (302) übertragen werden.

22. Steuerung einer Massenspeichereinrichtung nach Anspruch 14, wobei der Speicherschaltkreis (302) weiterhin einen Schreibezeiger (410) und einen Lesezeiger (412) aufweist, die durch den zumindest einen Prozessor (108, 124) geladen und gelesen werden können.

23. Steuerung einer Massenspeichereinrichtung nach Anspruch 14, welche weiterhin ein Adreßregister (404) des Pufferspeichers aufweist.

24. Steuerung einer Massenspeichereinrichtung nach Anspruch 14, wobei der Speicherschaltkreis (302) so ausgestaltet ist, daß er zumindest Prozessorprogrammcode aufnimmt.

25. Steuerung einer Massenspeichereinrichtung nach Anspruch 14, wobei der Speicherschaltkreis (302) weiterhin ein Register (420, 422) für das Heranholen von Adressen aufweist.

26. Steuerung für eine Massenspeichereinrichtung nach Anspruch 14, wobei:
der Pufferspeicher (112) als ein Speicher mit wahlfreiem Zugriff (RAM) ausgestaltet ist und aufweist:
eine Faserkanalschnittstelle (116), die mit dem Pufferspeicher verbunden ist, wobei der Pufferspeicherschaltkreis so ausgestaltet ist, daß er einen Faserkanalsteuerblock von der Faserkanalschnittstelle empfängt, und eine Zustandsmaschine (418), die mit dem zumindest einen Prozessor (108, 120), dem Speicherschaltkreis (302) und dem Pufferschaltkreis verbunden ist, wobei die Zustandsmaschine so ausgestaltet ist, daß sie einen Befehl von dem zumindest einen Prozessor empfängt und den Faserkanalsteuerblock zwischen dem Pufferspeicher und dem Speicherschaltkreis in Reaktion auf den Befehl überträgt.

27. Steuerung für eine Massenspeichereinrichtung nach Anspruch 14, wobei der Pufferspeicher (112) so ausgestaltet ist, daß er einen direkten Frame-Zugriff auf den Frame eines Faserkanals bereitstellt.

28. Steuerung für eine Massenspeichereinrichtung nach Anspruch 1, wobei:
die Steuerung (102) der Massenspeichereinrichtung über den Bus (106) mit einem Hostcomputer (104) verbunden ist,
der Speicherschaltkreis (302) so ausgestaltet ist, daß er während zumindest einer ersten Datenübertragung zwischen dem Speicherschaltkreis und dem Pufferspeicher (112) als ein First-In-First-Out-Speicher (FIFO) arbeitet, und
der Speicherschaltkreis so ausgelegt ist, daß er während einer zweiten Datenübertragung zwischen dem Speicherschaltkreis und dem zumindest einen Prozessor (108) als ein Speicher mit wahlfreiem Zugriff (RAM) arbeitet.

29. Steuerung eines Massenspeichers nach Anspruch 28, welche weiterhin einen Mikrocontroller (120) aufweist, der mit dem Speicherschaltkreis (302) verbunden ist, wobei der Speicher schaltkreis zumindest zwei Anschlüsse (Ports) aufweist, um es dem Mikrocontroller und dem zumindest einen Prozessor (108) zu ermöglichen, gleichzeitig auf den Speicherschaltkreis zuzugreifen.

30. Steuerung einer Massenspeichereinrichtung nach Anspruch 1, wobei
der Pufferspeicher (112) so ausgestaltet ist, daß er Kontextinformation hält,
der zumindest eine Prozessor (108, 120) einen Prozessor (108) einer ersten Festplattensteuerung aufweist, der mit dem Pufferspeicher verbunden ist, wobei der Prozessor der ersten Festplattensteuerung so ausgestaltet ist, daß er Operationen entsprechend der in dem Pufferspeicher gespeicherten Kontextinformation ausführt,
wobei der Speicherschaltkreis (302) in einer ersten Betriebsart als ein Speicher mit wahlfreiem Zugriff (RAM) arbeitet, und in einer zweiten Betriebsart als ein First-in-First-Out-Speicher (FIFO) arbeitet, wobei der Speicherschaltkreis verwendbar ist, um sowohl wechselnde Kontextinformation als auch PuffetFestplattendaten zu speichern, und weiterhin aufweist
einen Austauschschaltkreis, der dafür ausgelegt ist, zumindest einen Teil der Kontextinformation, welche in dem Pufferspeicher abgespeichert ist, mit der wechselnden bzw, alternativen Kontextinformation auszutauschen, die in dem Speicherschaltkreis gespeichert ist, und zwar in Reaktion auf zumindest ein erster Ereignis.

31. Steuerung für eine Massenspeichereinrichtung nach Anspruch 1, wobei;
die Steuerung (102) für die Massenspeichereinrichtung mit einem Festplattenlaufwerk (106) und einem Hostcomputer (104) verbunden ist,
die Steuerung der Massenspeichereinrichtung Daten verwaltet bzw. handhabt, weiche zwischen dem Festplattenlaufwerk und dem Hostcomputer übertragen werden, und wobei
der Pufferspeicher (112) so ausgestaltet ist, daß er Kontextinformation häit,
der zumindest eine Prozessor (108, 120) ein erster Festplattensteuerungsprozessor (108) ist, welcher mit dem Pufferspeicher verbunden ist und welcher so ausgestaltet ist, daß er Operationen entsprechend der Kontextinformation, die in dem Pufferspeicher gespeichert sind, ausführt,
der Speicherschaltkreis (302) wechselnde bzw. alternative Kontextinformation in einer ersten Betriebsart als ein Speicher mit wahlfreiem Zugriff (RAM) speichert und in einer zweiten Betriebsart Festplattendaten als First-In-First-Out-Speicher speichert, und
ein Austauschschaltkreis so ausgeschaltet ist, daß er zumindest einen Teil der in dem Pufferspeicher gespeicherten Kontextinformation gegen die alternative Kontextinformation austauscht, die in dem Speicherschaltkreis gespeichert ist, und zwar in Reaktion auf zumindest ein erstes Ereignis.

32. Verfahren zum Zugreifen auf und zum Speichern von Daten in der Steuerung (102) einer Massenspeichereinrichtung, wobei die Steuerung einen Pufferspeicher (112), zumindest einen Prozessor (108, 920) und einen Speicherschaltkreis (302) hat, wobei das Verfahren die Schritte aufweist:
Empfangen von Daten aus der Massenspeichereinrichtung und von einem Bus (116) bei dem Pufferspeicher,
Übertragen von Daten zwischen dem Speicherschaltkreis und dem Pufferspeicher in einem First-In-First-Out-Betrieb, und
Übertragen von Daten zwischen dem Speicherschaltkreis und dem zumindest einen Prozessor in einem Betrieb mit wahlfreiem Zugriff.

33. Verfahren zum Zugreifen auf und Speichern von Daten nach Anspruch 32, wobei der Speicherschaltkreis (302) ein Speicherschaltkreis mit mehreren Anschlüssen ist, der auf der Steuerung der Massenspeichereinrichtung angeordnet ist, und wobei das Verfahren die Schritte aufweist:
Übertragen von Daten aus dem Pufferspeicher auf den Speicherschaltkreis (302) mit mehreren Anschlüssen und Verwendung eines ersten Anschlusses des Speichers mit mehreren Anschlüssen, wobei der erste Anschluß ein First-In-First-Out-Anschluß ist und wobei der Speicher mit mehreren Anschlüssen so konfigurierbar ist, daß er in einem Speicherbetrieb nach dem First-in-First-Out-Prinzip arbeitet und so, daß er in einem Speicherbetrieb mit wahlfreiem Zugriff (RAM-Betrieb) arbeitet,
Übertragen von Daten zwischen dem Speicher mit mehreren Anschlüssen und einem ersten Prozessor (108) einer Festplattensteuerung unter Verwendung eines zweiten Anschlusses des Speichers mit mehreren Anschlüssen, wobei der zweite Prozessor der Festplattensteuerung so ausgestaltet ist, daß er Aufgaben auf hohem Niveau bzw, auf höherer Ebene ausführt, und
Übertragen von Daten zwischen dem Speicher mit mehreren Anschlüssen und einem zweiten Prozessor (120) der Festplattensteuerung unter Verwendung eines dritten Anschlusses des Speichers mit mehreren Anschlüssen, wobei der zweite Prozessor der Festplattensteuerung so ausgestaltet ist, daß er Aufgaben auf niedriger Ebene ausführt.

34. Verfahren zum Zugreifen auf und zum Speichern von Daten nach Anspruch 32, welches weiterhin das Modifizieren der in dem Speicher (302) mit mehreren Anschlüssen gespeicherten Daten aufweist.

35. Verfahren zum Zugreifen auf und zum Speichern von Daten nach Anspruch 32, welches weiterhin das Lesen der modifizierten Daten aus dem Speicher (302) mit mehreren Anschlüssen aufweist.

36. Verfahren zum Zugreifen auf und zum Speichern von Daten nach Anspruch 32, welches weiterhin das stoßweise Verschieben von Daten (in einem Burst) von dem Speicher (302) mit mehreren Anschlüssen in den Pufferspeicher (112) aufweist.

37. Verfahren zum Zugreifen auf und zum Speichern von Daten nach Anspruch 32, welches weiterhin das Übertragen der Daten von dem Pufferspeicher (112) in den Speicher (302) mit mehreren Anschlüssen aufweist, während ein zu den Daten gehöriger Fehlererfassungscode überprüft wird.

38. Verfahren zum Zugreifen auf und zum Speichern von Daten nach Anspruch 32, welches weiterhin aufweist:
Speichern einer Festplattenformattabelle in dem Speicher (302) mit mehreren Anschlüssen, und
Zugreifen auf die gespeicherte Festplattenformattabelle unter Verwendung des zweiten Anschlusses des Speichers mit mehreren Anschlüssen.

39. Verfahren zum Zugreifen auf und zum Speichern von Daten nach Anspruch 32, welches weiterhin das Zugreifen auf Programmcode aufweist, der in dem Speicher (302) mit mehreren Anschlüssen angeordnet ist.

40. Verfahren zum Zugreifen auf und zum Speichern von Daten nach Anspruch 32, welches weiterhin das Bereitstellen eines direkten Frame-Zugriffs auf einen Fäserkanalframe aufweist, der in dem Speicher (302) mit mehreren Anschlüssen gespeichert ist,

41. Verfahren zum Zugreifen auf und zum Speichern von Daten nach Anspruch 32, welches weiterhin die Schritte aufweist:
Übertragen eines Pufferlängenfeldes, welches zu einem Datenpaket aus dem Pufferspeicher (112) gehört, an eine erste Stelle des Speichers (302) mit mehreren Anschlüssen über den First-In-First-Out-Anschluß des Speichers mit mehreren Anschlüssen, wobei zumindest ein Teil des Puffertängenfetdes Information enthält, die sich auf die Menge von Daten bezieht, die über das Datenpaket übertragen werden,
Übertragen zumindest eines Teils des Datenpakets aus dem Pufferspeicher an zumindest eine zweite Stelle des Speichers mit mehreren Anschlüssen, und
Lesen des Pufferlängenfeldes aus dem Speicher mit mehreren Anschlüssen und dann Lesen des zumindest einen Teils des Datenpakets aus dem Speicher mit mehreren Anschlüssen.

42. Verfahren zum Zugreifen auf und zum Speichern von Daten nach Anspruch 41, wobei zumindest ein Abschnitt bzw. Teil des Puflerlängenfeldes verwendet wird, um die Position eines CRC in dem Datenpaket zu lokalisieren.

43. Verfahren zum Zugreifen auf und zum Speichern von Daten nach Anspruch 32, welches die Schritte aufweist:
Verwenden des Speichers (302) mit mehreren Anschlüssen in einer ersten Betriebsart unter der Verwaltung des ersten Prozessors (108) der Festplattensteuerung, um Daten, welche zwischen einer Festplattenspeichereinrichtung (106), die mit der Festplattensteuerung (102) verbunden ist, und einem Bus (116), der mit der Steuerung der Massenspeichereinrichtung verbunden ist, temporär zu speichern,
Speichern eines ersten Kontextes in dem Pufferspeicher (112),
Verwenden des Speichers mit mehreren Anschlüssen in einer zweiten Betriebsart, um einen zweiten Kontext für eine spätere Verwendung durch den ersten Prozessor der Festplattensteuerung zu speichern,
Austauschen zumindest eines Teils der ersten Kontextinformation, die in dem Pufferspeicher gespeichert ist, gegen zumindest einen Teil der zweiten Kontextinformation, die in dem Speicher mit mehreren Anschlüssen gespeichert ist, und zwar zumindest teilweise und in Reaktion auf ein erstes Ereignis, und
erneutes Speichern des ausgetauschten, zumindest einen Abschnittes der ersten Kontextinformation zurück in den Pufferspeicher, und zwar zumindest teilweise und in Reaktion auf ein zweites Ereignis.

44. Verfahren zum Zugreifen auf und zum Speichern von Daten nach Anspruch 32, welches die Schritte aufweist:
Speichern eines ersten Kontextes in dem Pufferspeicher (112),
Speichern eines zweiten Kontextes in dem Speicher (302) mit mehreren Anschlüssen,
Verwenden des ersten Prozessors (108) der Festplattensteuerung, um einen ersten Übertragungsvorgang, der sich auf den ersten Kontext bezieht, zu verwalten bzw. zu bewirken, wobei der erste Übertragungsvorgang Daten von einem Festplattenlaufwerk an eine Kommunikationsverbindung bzw. ein Kommunikationsglied überträgt,
Feststellen, daß das Festplattenlaufwerk (106) keine Daten an die Kommunikationsverbindung (116) überträgt, sobald die Kommunikationsverbindung in der Lage ist, Daten aufzunehmen,
Aussetzen des ersten Übertragungsvorganges,
Austauschen des ersten Kontextes aus dem Pufferspeicher durch den zweiten Kontext, der in dem Speicher mit mehreren Anschlüssen gespeichert ist,
Verwenden des ersten Prozessors der Festplattensteuerung, um einen zweiten Übertragungsvorgang, welcher dem zweiten Kontext entspricht, zu verwalten bzw. zu bewirken,
erneutes Speichern des ersten Kontextes in den Pufferspeicher aus dem Speicher mit mehreren Anschlüssen, nachdem zumindest ein Teil des zweiten Übertragungsvorganges abgeschlossen ist,
Abschließen bzw. Beenden des ersten Übertragungsvorganges, und
Betreiben des Speichers mit mehreren Anschlüssen in der Speicherbetriebsart First-In-First-Out, um Festplattendaten zwischen dem Speicher mit mehreren Anschlüssen und dem Pufferspeicher zu übertragen.

45. Computersystem, welches eine Steuerung einer Massenspeichereinrichtung nach einem der Ansprüche 1 bis 31 aufweist.

46. Festplattenlaufwerksystem, welches aufweist:
ein Festplattenlaufwerk, und
eine Steuerung, die mit dem Festplattenlaufwerk verbunden ist, um das Festplatienlauf werk zu steuern und um Daten zu verwalten, die zwischen dem Festplattenlaufwerk und einem Hostcomputer übertragen werden, wobei die Steuerung aufweist:
einen ersten Speicher, der so ausgestaltet ist, daß er Kontextinformation hält,
einen ersten Prozessor der Festplattensteuerung, welcher dafür ausgelegt ist, Vorgänge entsprechend der in dem ersten Speicher gespeicherten Kontextinfomiation auszuführen, wobei der erste Prozessor der Festplattensteuerung mit dem ersten Speicher verbunden ist,
einen zweiten Speicher, der so ausgestaltet ist, daß er in einer ersten Betriebsart als ein Speicher mit wahlfreiem Zugriff und in einer zweiten Betriebsart als ein Speicher nach dem First-In-First-Out-Prinzip arbeitet, wobei der zweite Speicher verwendbar ist, um sowohl alternative Kontextinformation zu speichern als auch um Festplattendaten zu puffern, wobei der zweite Speicher mit dem ersten Speicher verbunden ist, und
einen Austauschschaltkreis, der so ausgelegt ist, daß er zumindest einen Teil der Kontextinformation, welche in dem ersten Speicher gespeichert ist, durch alternative Kontextinformation, welche in dem zweiten Speicher gespeichert ist, austauscht, und zwar in Reaktion auf zumindest ein erstes Ereignis.

## Revendications

1. Dispositif de commande de dispositif de stockage de masse destiné à interfacer un dispositif de stockage de masse (106) à un ordinateur (104) par l'intermédiaire d'un bus (116), le dispositif de commande de dispositif de stockage de masse (102) comprenant une mémoire tampon (112) configurée pour recevoir des données depuis le dispositif de stockage de masse et pour recevoir des données provenant du bus, le dispositif de commande de dispositif de stockage de masse comprenant :
au moins un processeur (108, 120) ; et
un circuit mémoire (302) relié à la mémoire tampon et au processeur, le circuit mémoire étant configuré pour fonctionner comme une mémoire premier-entré-premier-sorti durant au moins un premier transfert de données entre le circuit mémoire et la mémoire tampon, le circuit mémoire étant configuré pour fonctionner comme une mémoire à accès aléatoire durant au moins un second transfert de données entre le circuit mémoire et le au moins un processeur.

2. Dispositif de commande de dispositif de stockage de masse selon la revendication 1 dans lequel au moins un parmi le premier transfert et le second transfert est mis en pause quand le circuit mémoire (302) est plein.

3. Dispositif de commande de dispositif de stockage de masse selon la revendication 1 dans lequel le circuit mémoire (302) est configuré pour envoyer des données en salves à la mémoire tampon (112).

4. Dispositif de commande de dispositif de stockage de masse selon la revendication 1 dans lequel le circuit mémoire (302) est automatiquement rechargé tandis que des données sont envoyées en salves depuis le circuit mémoire vers la mémoire tampon (112).

5. Dispositif de commande de dispositif de stockage de masse selon la revendication 1 dans lequel le circuit mémoire (302) est relié à une pluralité de fichiers de registre de dispositif de commande de régisseur à disque.

6. Dispositif de commande de dispositif de stockage de masse selon la revendication 1 dans lequel le circuit mémoire (302) possède une capacité de stockage et est configuré pour accepter un ordre de transfert qui spécifie une taille de transfert plus grande que la capacité de stockage du circuit mémoire.

7. Dispositif de commande de dispositif de stockage de masse selon la revendication 1 dans lequel le bus (116) est une interface E/S et dans lequel l'interface E/S est une interface de Canal à Fibre.

8. Dispositif de commande de dispositif de stockage de masse selon la revendication 1 comprenant de plus une machine à états (418) reliée au au moins un processeur (108, 120), à la mémoire tampon (112) et au circuit mémoire (302), la machine à états étant configurée pour provoquer le transfert d'un bloc de contrôle de Canal à Fibre depuis la mémoire tampon vers le circuit mémoire et pour provoquer la vérification d'un code de détection d'erreur.

9. Dispositif de commande de dispositif de stockage de masse selon la revendication 1 dans lequel le dispositif de stockage de masse (106) est un régisseur à disque magnétique.

10. Dispositif de commande de dispositif de stockage de masse selon la revendication 1 dans lequel :
le bus (116) comprend une interface E/S ;
le dispositif de commande de dispositif de stockage de masse (102) comprend de plus une interface de régisseur à disque (136) reliée à un régisseur à disque (106) et une interface E/S (124) reliée au bus ;
la mémoire tampon (112) est reliée pour transférer des données vers et depuis l'interface de régisseur à disque et vers et depuis l'interface E/S ; et
le dispositif de commande de dispositif de stockage de masse est de plus **caractérisé par** :
le au moins un processeur (108, 120) comprenant :
un premier processeur (108) utilisé pour au moins commander l'interface de régisseur à disque ; et
un second processeur (120) utilisé pour au moins effectuer des tâches de bas niveau ;
et
le circuit mémoire (302) comprenant :
un port DMA (210) relié à la mémoire tampon ;
un port à accès registre (408) relié au premier processeur et au second processeur ;
un port à accès aléatoire (404) relié au premier processeur et au second processeur ; et
un pointeur de lecture (412) et un pointeur d'écriture (410) accessibles par au moins l'un parmi le premier processeur et le second processeur.

11. Dispositif de commande de dispositif de stockage de masse selon la revendication 10 comprenant de plus un compteur d'utilisation mémoire (414).

12. Dispositif de commande de dispositif de stockage de masse selon la revendication 10, dans lequel le pointeur de lecture (412) et le pointeur d'écriture (410) peuvent être chargés par l'un ou l'autre parmi le premier processeur (108) et le second processeur (120).

13. Dispositif de commande de dispositif de stockage de masse selon la revendication 10 comprenant de plus un module de détection d'erreur (424) qui vérifie un code de redondance cyclique (CRC pour cyclic redundancy code) pour des données écrites vers la mémoire tampon (112).

14. Dispositif de commande de dispositif de stockage de masse selon la revendication 1, le circuit mémoire (302) étant chargeable en utilisant un accès direct mémoire.

15. Dispositif de commande de dispositif de stockage de masse selon la revendication 14, comprenant de plus une interface de Canal à Fibre (116) reliée à la mémoire tampon (112) dans lequel des données sont transférées entre la mémoire tampon et l'interface de Canal à Fibre par l'intermédiaire du circuit mémoire (302).

16. Dispositif de commande de dispositif de stockage de masse selon la revendication 14 comprenant de plus un circuit de commande (122) relié à la mémoire tampon (112) et au circuit mémoire (302) dans lequel le circuit de commande est configuré pour transférer un bloc de contrôle de Canal à Fibre depuis la mémoire tampon vers le circuit mémoire.

17. Dispositif de commande de dispositif de stockage de masse selon la revendication 14 dans lequel le circuit mémoire (302) est configuré pour fournir un accès direct trame pour au moins une première trame par le au moins un processeur (108).

18. Dispositif de commande de dispositif de stockage de masse selon la revendication 14 dans lequel le circuit mémoire (302) possède une taille calibrée pour qu'il puisse détenir un bloc de contrôle de Canal à Fibre et un code de détection d'erreur associé.

19. Dispositif de commande de dispositif de stockage de masse selon la revendication 14 dans lequel le circuit mémoire (302) possède au moins quatre ports.

20. Dispositif de commande de dispositif de stockage de masse selon la revendication 14 dans lequel le circuit mémoire (302) comprend une interface à accès registre (408) et une interface à accès direct (404).

21. Dispositif de commande de dispositif de stockage de masse selon la revendication 14 comprenant de plus un module de détection d'erreur (424) qui vérifie un code de redondance cyclique (CRC) pour des données transférées depuis la mémoire tampon (112) vers le circuit mémoire (302).

22. Dispositif de commande de dispositif de stockage de masse selon la revendication 14 dans lequel, le circuit mémoire (302) comprend de plus un pointeur d'écriture (410) et un pointeur de lecture (412) chargeables et lisibles par le au moins un processeur (108, 120).

23. Dispositif de commande de dispositif de stockage de masse selon la revendication 14 comprenant de plus un registre d'adresse de mémoire tampon (404).

24. Dispositif de commande de dispositif de stockage de masse selon la revendication 14 dans lequel le circuit mémoire (302) est configuré pour recevoir au moins un code de programme de processeur.

25. Dispositif de commande de dispositif de stockage de masse selon la revendication 14 dans lequel le circuit mémoire (302) comprend de plus un registre d'adresse de préchargement (420, 422).

26. Dispositif de commande de dispositif de stockage de masse selon la revendication 14 dans lequel :
le tampon mémoire (112) est configuré comme une mémoire à accès aléatoire ; et comprenant
une interface de Canal à Fibre (116) reliée à la mémoire tampon, le circuit de mémoire tampon étant configuré pour recevoir un bloc de contrôle de Canal à Fibre depuis l'interface de Canal à Fibre ; et
une machine à états (418) reliée au au moins un processeur (108, 120), au circuit mémoire (302) et à la mémoire tampon, la machine à états étant configurée pour recevoir un ordre du au moins un processeur et pour transférer le bloc de contrôle de Canal à fibre entre la mémoire tampon et le circuit mémoire en réponse à l'ordre.

27. Dispositif de commande de dispositif de stockage de masse selon la revendication 14 dans lequel le tampon mémoire (112) est configuré pour fournir un accès direct trame à une trame de Canal à Fibre.

28. Dispositif de commande de dispositif de stockage de masse selon la revendication 1 dans lequel :
le dispositif de commande de dispositif de stockage de masse (102) est relié à un ordinateur hôte (104) par l'intermédiaire du bus (106) ;
le circuit mémoire (302) est configuré pour fonctionner comme une mémoire premier-entré-premier-sorti durant au moins un premier transfert de données entre le circuit mémoire et la mémoire tampon (112) ; et
le circuit mémoire est configuré pour fonctionner comme une mémoire à accès aléatoire durant au moins un second transfert de données entre le circuit mémoire et le au moins un processeur (108).

29. Dispositif de commande de stockage de masse selon la revendication 28, comprenant de plus un microcontrôleur (120) relié au circuit mémoire (302), le circuit mémoire possédant au moins deux ports pour autoriser le microcontrôleur et le au moins un processeur (108) à accéder au circuit mémoire simultanément.

30. Dispositif de commande de dispositif de stockage de masse selon la revendication 1 dans lequel :
la mémoire tampon (112) est configurée pour détenir une information de contexte ;
le au moins un processeur (108, 120) comprend un premier processeur de dispositif de commande de disque (108) relié à la mémoire tampon, le premier processeur de dispositif de commande de disque étant configuré pour exécuter des opérations conformément à l'information de contexte stockée dans la mémoire tampon ;
le circuit mémoire (302) fonctionne comme une mémoire à accès aléatoire dans un premier mode et fonctionne comme une mémoire premier-entré-premier-sorti dans un second mode, le circuit mémoire étant utilisable à la fois pour stocker une information de contexte alternative et pour mettre en mémoire tampon des données de disque ; et comprenant
un circuit de commutation configuré pour commuter au moins une partie de l'information de contexte stockée dans la mémoire tampon avec l'information de contexte alternative stockée dans le circuit mémoire en réponse à au moins un premier événement.

31. Dispositif de commande de dispositif de stockage de masse selon la revendication 1 dans lequel :
le dispositif de commande de dispositif de stockage de masse (102) est relié à un régisseur à disque (106) et à un ordinateur hôte (104) ;
le dispositif de commande de dispositif de stockage de masse gère des données qui sont en cours de transfert entre le régisseur à disque et l'ordinateur hôte ; et dans lequel
la mémoire tampon (112) est configurée pour détenir une information de contexte ;
le au moins un processeur (108, 120) est un premier processeur de dispositif de commande de disque (108) relié à la mémoire tampon et est configuré pour exécuter des opérations conformément à l'information de contexte stockée dans la mémoire tampon ;
le circuit mémoire (302) stocke une information de contexte alternative dans un premier mode de fonctionnement comme une mémoire à accès aléatoire et met en mémoire tampon des données de disque dans un second mode de fonctionnement comme mémoire premier-entré-premier-sorti ; et
un circuit de commutation est configuré pour commuter au moins une partie de l'information de contexte stockée dans la mémoire tampon avec l'information de contexte alternative stockée dans le circuit mémoire en réponse à au moins un premier événement.

32. Procédé d'accès et de stockage de données dans un dispositif de commande de dispositif de stockage de masse (102) possédant une mémoire tampon (112), au moins un processeur (108, 120) et un circuit mémoire (302) comprenant les étapes consistant à :
recevoir, au niveau de la mémoire tampon, des données en provenance du dispositif de stockage de masse et d'un bus (116),
transférer des données entre le circuit mémoire et la mémoire tampon dans un mode premier-entré-premier-sorti ; et
transférer des données entre le circuit mémoire et le au moins un processeur dans un mode à accès aléatoire.

33. Procédé d'accès et de stockage de données selon la revendication 32 dans lequel le circuit mémoire (302) est un circuit mémoire multiport situé sur le dispositif de commande de dispositif de stockage de masse et comprenant les étapes consistant à :
transférer des données depuis la mémoire tampon vers le circuit mémoire multiport (302) en utilisant un premier port de la mémoire multiport, dans lequel le premier port est un port premier-entré-premier-sorti et dans lequel la mémoire multiport est configurable pour fonctionner dans un mode mémoire premier-entré-premier-sorti et pour fonctionner dans un mode mémoire à accès aléatoire ;
transférer des données entre la mémoire multiport et un premier processeur de dispositif de commande de disque (108) en utilisant un second port de la mémoire multiport, dans lequel le premier processeur de dispositif de commande de disque est configuré pour effectuer des tâches de haut niveau ; et
transférer des données entre la mémoire multiport et un second processeur de dispositif de commande de disque (120) en utilisant un troisième port de la mémoire multiport, dans lequel le second processeur de dispositif de commande de disque est configuré pour effectuer des tâches de bas niveau.

34. Procédé d'accès et de stockage de données selon la revendication 32, comprenant de plus la modification des données stockées dans la mémoire multiport (302).

35. Procédé d'accès et de stockage de données selon la revendication 32, comprenant de plus la lecture des données modifiées hors de la mémoire multiport (302).

36. Procédé d'accès et de stockage de données selon la revendication 32, comprenant de plus l'envoi de données en salves depuis la mémoire multiport (302) vers la mémoire tampon (112).

37. Procédé d'accès et de stockage de données selon la revendication 32, comprenant de plus le transfert de données depuis la mémoire tampon (112) vers la mémoire multiport (302) tout en vérifiant un code de détection d'erreur associé aux données.

38. Procédé d'accès et de stockage de données selon la revendication 32, comprenant de plus :
le stockage d'une table de formats de disque dans la mémoire multiport (302) ; et
l'accès à la table de formats de disque stockée en utilisant le second port de la mémoire multiport.

39. Procédé d'accès et de stockage de données selon la revendication 32, comprenant de plus l'accès à un code de programme situé dans la mémoire multiport (302).

40. Procédé d'accès et de stockage de données selon la revendication 32, comprenant de plus la fourniture d'un accès direct trame à une trame de Canal à Fibre stockée dans la mémoire multiport (302).

41. Procédé d'accès et de stockage de données selon la revendication 32, comprenant les étapes consistant à :
transférer un champ de longueur de tampon associé à un paquet de données depuis la mémoire tampon (112) vers un premier emplacement de la mémoire multiport (302) par l'intermédiaire du port premier-entré-premier-sorti de la mémoire multiport dans lequel au moins une partie du champ de longueur de tampon comprend une information liée à la quantité de données qui est en cours de transfert par l'intermédiaire du paquet de données ;
transférer au moins une partie du paquet de données depuis la mémoire tampon vers au moins un second emplacement de la mémoire multiport ; et
lire le champ de longueur de tampon depuis la mémoire multiport puis lire la au moins une partie du paquet de données depuis la mémoire multiport.

42. Procédé d'accès et de stockage de données selon la revendication 41, dans lequel au moins une partie du champ de longueur de tampon est utilisée pour situer la position d'un CRC dans le paquet de données.

43. Procédé d'accès et de stockage de données selon la revendication 32 comprenant les étapes consistant à :
utiliser la mémoire multiport (302) dans un premier mode sous la gestion du premier processeur de dispositif de commande de disque (108) pour stocker temporairement des données qui sont en cours de transfert entre un dispositif de stockage de disque (106) relié au dispositif de commande de disque (102) et un bus (116) relié au dispositif de commande de dispositif de stockage de masse ;
stocker un premier contexte dans la mémoire tampon (112) ;
utiliser la mémoire multiport dans un second mode pour stocker un second contexte en vue d'un usage ultérieur par le premier processeur de dispositif de commande de disque ;
commuter au moins une partie de la première information de contexte stockée dans la mémoire tampon avec au moins une partie de la seconde information de contexte stockée dans la mémoire multiport au moins partiellement en réponse à un premier événement ; et
remettre en place la au moins une partie commutée de la première information de contexte en la ramenant dans la mémoire tampon au moins partiellement en réponse à un second événement.

44. Procédé d'accès et de stockage de données selon la revendication 32 comprenant les étapes consistant à :
stocker un premier contexte dans la mémoire tampon (112) ;
stocker un second contexte dans la mémoire multiport (302) ;
utiliser le premier processeur de dispositif de commande de disque (108) pour gérer une première opération de transfert liée au premier contexte, dans lequel la première opération de transfert transfère des données d'un régisseur à disque vers un lien de communication ;
déterminer que le régisseur à disque (106) n'est pas en train de transférer des données vers le lien de communication (116) aussi rapidement que le lien de communication est capable de recevoir des données ;
suspendre la première opération de transfert ;
commuter le premier contexte depuis la mémoire tampon avec le second contexte stocké dans la mémoire multiport ;
utiliser le premier processeur de dispositif de commande de disque pour gérer une seconde opération de transfert correspondant au second contexte ;
remettre en place le premier contexte dans la mémoire tampon depuis la mémoire multiport après avoir achevé au moins une partie de la seconde opération de transfert ;
terminer la première opération de transfert ; et
faire fonctionner la mémoire multiport dans un mode mémoire premier-entré-premier-sorti pour transférer des données de disque entre la mémoire multiport et la mémoire tampon.

45. Système informatique comprenant un dispositif de commande de dispositif de stockage de masse selon l'une quelconque des revendications 1 à 31.

46. Système de régisseur à disque comprenant :
un régisseur à disque ; et
un dispositif de commande relié au régisseur à disque pour commander le régisseur à disque et pour gérer les données qui sont en cours de transfert entre le régisseur à disque et un ordinateur hôte, le dispositif de commande comprenant :
une première mémoire configurée pour détenir une information de contexte ;
un premier processeur de dispositif de commande de disque configuré pour exécuter des opérations conformément à l'information de contexte stockée dans la première mémoire, le premier processeur de dispositif de commande de disque étant relié à la première mémoire ;
une seconde mémoire configurée pour agir en tant que mémoire à accès aléatoire dans un premier mode et en tant que mémoire premier-entré-premier-sorti dans un second mode, la seconde mémoire étant utilisable à la fois pour stocker une information de contexte alternative et pour mettre en mémoire tampon des données de disque, la seconde mémoire étant reliée à la première mémoire ; et
un circuit de commutation configuré pour commuter au moins une partie de l'information de contexte stockée dans la première mémoire avec l'information de contexte alternative stockée dans la seconde mémoire en réponse à au moins un premier événement.
